Europäisches Patentamt

European Patent Office

Office européen des brevets

(19)

(11) **EP 0 540 425 B1**

(12) **EUROPEAN PATENT SPECIFICATION**

(45) Date of publication and mention
of the grant of the patent:
**25.09.1996   Bulletin 1996/39**

(51) Int Cl.6: **G01V 3/20**

(21) Application number: **92402945.7**

(22) Date of filing: **30.10.1992**

(54) **Method and apparatus for investigating earth formations**

Verfahren und Gerät zum Untersuchen von Erdformationen

Procédé et dispositif pour étudier les formations terestre

(84) Designated Contracting States:
**DE DK FR GB IT NL**

(30) Priority: **31.10.1991   US 786137**
**09.10.1992   US 955101**

(43) Date of publication of application:
**05.05.1993   Bulletin 1993/18**

(73) Proprietors:
  • **SCHLUMBERGER LIMITED**
    **New York, N.Y. 10172 (US)**
    Designated Contracting States:
    **GB**
  • **SERVICES PETROLIERS SCHLUMBERGER**
    **F-75007 Paris (FR)**
    Designated Contracting States:
    **FR**
  • **SCHLUMBERGER TECHNOLOGY B.V.**
    **NL-2517 KM Den Haag (NL)**
    Designated Contracting States:
    **DE DK IT**
  • **SCHLUMBERGER HOLDINGS LIMITED**
    **Road Town, Tortola (VG)**
    Designated Contracting States:
    **NL**

(72) Inventors:
  • **Clark, Brian**
    **Missouri City, Texas 77459 (US)**
  • **Luling, Martin**
    **Danbury, CT 06811 (US)**
  • **Bonner, Stephen D.**
    **Sugar Land, Texas 77479 (US)**
  • **Jundt, Jacques**
    **Missoury City, Texas 77459 (US)**
  • **Bagersh, Abdullah A.**
    **Houston, Texas 77025 (US)**
  • **Rosthal, Richard A.**
    **Houston, Texas 77079 (US)**

(74) Representative: **Stoole, Brian David**
    **Schlumberger plc,**
    **Patent Department,**
    **1 Kingsway, First Floor**
    **London WC2B 6XH (GB)**

(56) References cited:
    **EP-A- 0 131 516**       **GB-A- 2 001 442**
    **US-A- 2 389 241**       **US-A- 3 305 771**
    **US-A- 4 739 325**       **US-A- 5 017 778**

**Description**

<u>FIELD OF THE INVENTION</u>

This invention relates to the field of well logging and, more particularly, to well logging apparatus for determining earth formation resistivity and sending the information to the earth's surface. A form of the invention has general application to the well logging art, but the invention is particularly useful for logging-while-drilling (also called measurement-while-drilling).

<u>BACKGROUND OF THE INVENTION</u>

Resistivity logging, which measures the electrical resistivity of formations surrounding an earth borehole, is a commonly used technique of formation evaluation. For example, porous formations having high resistivity generally indicate the presence of hydrocarbons, while porous formations having low resistivity are generally water saturated. In so-called "wireline" well logging, wherein measurements are taken in a well bore (with the drill string removed) by lowering a logging device in the well bore on a wireline cable and taking measurements with the device as the cable is withdrawn, there are several techniques of resistivity logging which use elements such as electrodes or coils. Various arrangements of electrodes, on the logging device and at the earth's surface, have been utilized to measure electrical currents and/or potentials from which formation resistivity can be derived. For example, button electrodes have been employed on a pad which is urged against the borehole wall. These electrodes have been used to obtain azimuthal resistivity measurements, and focusing techniques have been employed to obtain resistivity measurements that have substantial lateral extent into the formations and provide relatively high vertical resolution resistivity information.

Various techniques for measuring resistivity while drilling have also been utilized or proposed. Techniques employed in wireline logging may or may not be adaptable for use in measurement-while-drilling equipment. The borehole presents a difficult environment, even for wireline logging, but the environment near the well bottom during drilling is particularly hostile to measuring equipment. For logging-while-drilling applications, the measuring devices are housed in heavy steel drill collars, the mechanical integrity of which cannot be compromised. Measurement approaches which require a substantial surface area of electrically insulating material on the surface of a drill collar housing are considered impractical, since the insulating material will likely be damaged or destroyed. This is particularly true for measuring structures that would attempt to attain intimate contact with the newly drilled borehole wall as the drill string continues its rotation and penetration, with the attendant abrasion and other stresses.

One such logging-while-drilling device is disclosed in U.S. Patent No. 2,389,241. This device utilizes a ring electrode in conjunction with a wire mesh or spirally wrapped metallic ribbon electrode which provides a large contact area. These electrodes are backed by relatively long insulating sleeves mounted on the drill collar.

One resistivity measuring approach is to utilize a plurality of toroidal coil antennas, spaced apart, that are mounted in insulating media around a drill collar or recessed regions thereof. A transmitting antenna of this nature radiates electromagnetic energy having a dominant transverse magnetic component, and can use the electrically conductive body of the drill collar to good advantage, as described next.

In U.S. Patent No. 3,408,561 there is disclosed a logging-while-drilling system wherein a receiving toroidal coil is mounted in a recess on a drill collar near the drill bit and a transmitting toroidal coil is mounted on the drill collar above the receiver coil. The drill collar serves as part of a one-turn "secondary winding" for the toroidal antennas, the remainder of such "secondary winding" including a current return path through the mud and formations. The voltage induced in the receiver toroidal coil provides an indication of the resistivity of formations around the drill bit. U.S. Patent No. 3,305,771 utilizes a similar principle, but employs a pair of spaced-apart transmitting toroidal coils and a pair of spaced-apart receiving toroidal coils between the transmitting toroidal coils.

As generally described in the prior art, a transmitter toroidal coil mounted on a drill collar induces current in the drill collar which can be envisioned as leaving the drill collar, entering the formations below the transmitter coil, and returning to the drill string above the transmitter coil. Since the drill collar below the transmitter coil is substantially an equipotential surface, a portion of the current measured by a lower receiver toroidal coil mounted near the drill bit tends to be laterally focused. This can provide a "lateral" resistivity measurement of formations adjacent the drill collar. Also, a portion of current leaving the drill stem below the receiver coil provides a "bit resistivity" measurement; that is, a measurement of the resistivity of the formations instantaneously being cut by the bit. [See, for example, the above-identified U.S. Patent No.s 3,408,561 and 3,305,771, and publications entitled "A New Resistivity Tool For Measurement While Drilling", SPWLA Twenty-Sixth Annual Logging Symposium (1985) and "Determining The Invasion Near The Bit With The MWD Toroid Sonde", SPWLA Twenty-Seventh Annual Logging Symposium (1986).] Thus, the prior art indicates that a measurement-while-drilling logging device using toroidal coil transmitting and receiving antennas can be employed to obtain lateral resistivity measurements and/or bit resistivity measurements.

Reference can also be made to the following which relate to measurement-while-drilling using electrodes and other transducers: U.S. Patent No. 4,786,874, U.S. Patent No. 5,017,778, and U.S. Patent No. 5,130,950.

Resistivity measurements obtained using transmitting and receiving toroidal coils on a conductive metal body are useful, particularly in logging-while-drilling applications, but it would be desirable to obtain measurements which can provide further information concerning the downhole formations; for example, lateral resistivity information having improved vertical resolution, azimuthal resistivity information, and multiple depths of investigation for such resistivity information. It is among the objects of the present invention to devise equipment which can provide such further resistivity measurement information. It is among the objects hereof to devise techniques of resistivity logging which exhibit improved performance in the presence of formation bedding having substantial resistivity contrasts.

In logging-while-drilling applications, various schemes have been proposed for transmitting the measurement information to the surface of the earth. A number of these schemes involve using a toroidal coil antenna to radiate electromagnetic energy having a transverse magnetic component from downhole to the earth's surface, or to repeaters along the drill string which receive, boost, and re-transmit the signals using further toroidal coil transmitters. As in the systems first described above which utilize toroidal coils for obtainment of resistivity measurements, the drill string is used as a current carrier. Reference can be made, for example, to U.S. Patent No.s 3,186,222, 3,967,201, 4,578,675, 4,725,837, 4,739,325, and 4,839,644. In the U.S. Patent No. 4,578,675 there is disclosed a logging-while-drilling apparatus which utilizes toroidal coil antennas to obtain bottom-hole resistivity measurements and employs one of these antennas, on a time-sharing basis, for two-way communication with equipment at the surface of the earth. The communication may be via passive or active repeater units further uphole. In general, downhole/surface electromagnetic telemetry approaches which use the drill string as a current carrying component (and, typically, the mud and the formations as a return current path) have intrinsic limitations. The mud conductivity and the conductivity and heterogeneity of the surrounding formations will affect the signal, and the need for boosters or repeaters is inconvenient and expensive.

For various reasons, the approach that has been the most successful for logging-while-drilling communication between the well bottom and the earth's surface has been so-called mud pulse telemetry. Briefly, pressure pulses (or acoustic pulses) modulated with the information to be conveyed, are applied to the mud column [typically downhole, for communication to the surface, although two-way communication is also used], and received and demodulated uphole.

A downhole mud telemetry subassembly typically includes the equipment for controlling data communication with the surface and for applying modulated acoustic pulses to the mud. When a measurement subassembly (e.g. one measuring formation parameters and/or other parameters concerning drilling such as downhole weight on bit or direction and inclination of the borehole) is housed in a drill collar that is mounted adjacent the downhole mud telemetry subassembly, a wiring connector can be provided for electronic connection between these subassemblies. The nature of the drill collar sections housing these units, the typical threaded mechanical connections therebetween, and the stresses to which the connections are subjected, render the connection of wires somewhat inconvenient, but such connections are commonly implemented. A larger problem arises, however, when a desired bottom hole arrangement of telemetry equipment, measurement collars, stabilizer collars, etc. involves separation between the mud telemetry subassembly and one or more measurement subassemblies that are intended to communicate therewith. Under such circumstance, wiring buses and connectors may be provided for local electronic communication between the measurement subassembly and the downhole mud telemetry subassembly, but the requirement for crossing other drill collar sections and joints is disadvantageous. The problem is exacerbated when the relative placements of a particular measurement subassembly (or subassemblies) with respect to the downhole mud telemetry subassembly is not known a-priori and is decided spontaneously at the well site, as is often the case in modern drilling operations.

It is therefore among the further objects of the present invention to provide improvement in the efficiency and flexibility of communications in logging-while-drilling systems.

SUMMARY OF THE INVENTION

A form of the present invention utilizes a toroidal coil antenna mounted, in an insulating medium, on a drill collar to induce a current which travels in a path that includes the drill collar and earth formations around the drill collar. As is generally known in the art, one or more toroidal coil receiving antennas can be mounted, in an insulating medium, on the drill collar to obtain the types of measurements described in the Background hereof. A form of the present invention expands on the toroid-to-toroid type of measurement to obtain further useful information about the downhole formations. In accordance with a feature of the present invention, at least one electrode is provided on the drill collar and is utilized to detect currents transmitted by the transmitter toroidal coil which return via the formations to the electrode(s) laterally; that is, approximately normal to the axis of the drill collar. The electrodes preferably have a relatively small vertical extent, and the measurements taken with these electrodes are useful in obtaining formation resistivity with relatively high vertical resolution, as well as relatively high depth of investigation for the resolution provided. The electrodes can also provide azimuthal resistivity information. Thus, resistivity logging measurements are obtained that can supplement or replace resistivity measurements obtained with toroidal coil receiving antenna(s). The electrode(s) can be mounted in a drill collar or, in accordance with a feature hereof, on a stabilizer blade attached to or integral with the drill collar. In an embodiment hereof, button-type electrode(s) are utilized, as well as a ring-type of electrode.

In accordance with an embodiment of the invention, an apparatus is disclosed for determining the resistivity of formations surrounding an earth borehole. [In the present application, any references to the determination or use of resistivity are intended to generically mean conductivity as well, and vice versa. These quantities are reciprocals, and mention of one or the other herein is for convenience of description, and not intended in a limiting sense.] An electrically conductive metal body is movable through the borehole. A toroidal coil antenna is disposed on the body. [Throughout the present application "disposed on" and "disposed in" are both intended to generically include "disposed on or in", and "mounted on" and "mounted in" are both intended to generically include "mounted on or in".] Means are provided for energizing the transmitting toroidal coil antenna to induce a current which travels in a path that includes the body and the formations. An electrode is disposed on the body, and means are provided for measuring the electrical effect of the current on the electrode, said electrical effect being an indication of the resistivity of the formations. In a preferred embodiment of the invention, the means for measuring the electrical effect on the electrode comprises means for measuring the current flow in the electrode. Also in this embodiment, the electrode is electrically coupled to said body, either directly or via circuitry used to measure the current flow in the electrode, and the surface of said electrode is electrically isolated from the surface of said body.

Applicant recognizes that the measurement at an electrode in the described type of system is, at least to some degree, determined by the total current distribution into the overall body of the apparatus which, in the described system, is the drill collar and the conductive drill string coupled therewith. The total current distribution, in turn, depends to some extent on the formation resistivity along the entire length of the drill string. A problem arises when the current measured at the previously described electrode(s) is affected to a substantial degree by formations a meaningful distance from the region of the electrode, and such formations have resistivities that are different than the resistivity of the formations in the region of the electrode(s). For example, a problem occurs in the logging-while-drilling apparatus when the measuring electrode(s) is traversing a resistive bed and the drill bit cuts into a more conductive bed. When this happens the current being emitted from the electrode decreases, falsely indicating a more resistive formation in the region of the electrode. [This occurs when the electrode is below the transmitter. Conversely, if the electrode is above the transmitter, the current being emitted from the electrode increases, falsely indicating a more conductive formation in the region of the electrode.] A form of the present invention greatly reduces this and other problems.

In accordance with an embodiment of this form of the invention, a first transmitter means is provided for establishing a first current in the body from a first transmitter position on the body, said first current traveling in a path that includes the body and the formations. Means are provided for measuring at the electrode a first electrical signal resulting from the first current. A second transmitter means is provided for establishing a second current in the body from a second transmitter position on the body that is spaced from the first transmitter position, the second current traveling in a path that includes the body and the formations. Means are provided for measuring at the electrode a second electrical signal resulting from the second current. Current monitor means are provided for measuring the axial current passing a monitor position on the body to obtain a monitor current value. Means are then provided for deriving an indication of formation resistivity as a function of the first electrical signal, the second electrical signal, and the monitor current value.

In one embodiment of this form of the invention, the current monitor means comprises means for obtaining a first monitor current value when the first transmitter means is operative, and means for obtaining a second monitor current value when the second transmitter means is operative, the deriving means being operative to derive said indication of formation resistivity as a function of the first electrical signal, the second electrical signal, said first monitor current value, and said second monitor current value. In a form of this embodiment, a further current monitor means is provided at a further monitor position for measuring the axial current passing a further monitor position on the body to obtain a further monitor current value, and the deriving means is operative to derive the indication of formation resistivity as a function of the further monitor current value.

As described further in detail hereinbelow, this form of the present invention operates to effectively reduce or eliminate the deleterious effects that resistivity bedding contrasts in the general vicinity of the tool can have on the intended measurement of the resistivity of formations surrounding the measuring electrode.

In accordance with a further form of the invention, advantages in the efficiency and flexibility of communication are attained by utilizing both electromagnetic transmission and acoustic transmission in communicating information between bottom hole subassemblies and the earth's surface. Local downhole electromagnetic communication (e.g. toroid-to-toroid), e.g. between several sections of drill collar, is an effective means of communication over a relatively short distance, and the need for hard wiring communication between bottom hole subassemblies is reduced or eliminated, while reliable acoustic communication with the earth's surface is retained. This is particularly advantageous in situations where a measurement subassembly is non-adjacent to the surface communications subassembly in a bottom hole arrangement, or where the relative placements of these subassemblies in the bottom hole arrangement are not known a priori.

In accordance with an embodiment of a form of the invention, a first subassembly is mountable in the drill string near the bit, the first subassembly including: a first electrically conductive body; means disposed in the first body for measuring a physical parameter relating to said drilling; a first toroidal coil antenna disposed on the first body; and means for generating a local communication signal which depends on said measured physical parameter, and for coupling said local communication signal to said first toroidal coil antenna. [As used herein, a physical parameter relating to the drilling is intended to generically include measurements of the properties of formations near the drill bit and measurements relating to the drilling operation and the drill bit itself.] A second subassembly is mountable in the drill string near the bit, the second subassembly including: a second electrically conductive body; a second toroidal coil antenna disposed on the second body; means coupled with the second toroidal coil antenna for receiving said local communication signal and generating a surface communication signal which depends on said local communication signal; and an acoustic transmitter for transmitting an acoustic surface communication signal. An acoustic receiver is provided at the earth's surface for receiving the acoustic surface communication signal.

Further features and advantages of the invention will become more readily apparent from the following detailed description when taken in conjunction with the accompanying drawings.

BRIEF DESCRIPTION OF THE DRAWINGS

Fig. 1 is a schematic diagram, partially in block form, of a logging-while-drilling apparatus in accordance with an embodiment of the invention, shown attached to a drill string that is suspended in a borehole by a conventional drilling rig.

Fig. 2 is a cross-sectional view of a measuring and local communications subassembly in accordance with an embodiment of the invention.

Fig. 3 is a cross-sectional view of the subassembly of Fig. 2, in greater detail.

Fig. 4 is a front view of a stabilizer blade, with electrodes mounted therein, in accordance with an embodiment of the invention.

Fig. 5 is a cross-sectional view, as taken through a section defined by section line 5-5 of Fig. 4, of an embodiment of an electrode in accordance with a form of the invention.

Fig. 6 is a schematic diagram of an equivalent circuit of the Fig. 5 embodiment.

Fig. 7 is a cross-sectional view, partially in schematic form, of an embodiment of an electrode and associated circuitry in accordance with a further form of the invention.

Fig. 8 is a cross-sectional view of an embodiment of a ring electrode used in a form of the invention.

Fig. 9 is a representation of the type of current pattern obtained when the transmitting toroidal coil of Fig. 2 is energized.

Fig. 10 is a block diagram, partially in schematic form, of the antennas, electrodes, and circuitry utilized in an embodiment of the invention.

Fig. 11 is a flow diagram of an embodiment of a routine for programming the processor of the Fig. 10 embodiment.

Fig. 12 is a simplified diagram of a drill collar, upper and lower toroidal transmitters, and a ring electrode, which is useful in understanding a form of the invention.

Fig. 13 is a graph of resistivity versus depth in a series of conductive beds for measurement at the ring electrode of Fig. 12, with transmission by the upper and the lower transmitters thereof.

Fig. 14 illustrates a structure like that of Fig. 12, but for an embodiment with a monitor toroidal receiver adjacent the ring electrode.

Fig. 15 illustrates a structure like that of Fig. 14, but for an embodiment with a further monitor toroidal receiver adjacent the lower transmitter.

Fig. 16 is a graph of resistivity versus depth in a series of conductive beds for an improvement in accordance with an embodiment of the invention.

Figures 17 and 18 are graphs of resistivity versus depth for uncompensated and compensated logs in resistive beds.

Fig. 19 illustrates current path lines for the device of Fig. 12 adjacent a conductive bed, with transmission by the upper transmitter.

Fig. 20 illustrates current path lines for the device of Fig. 12 adjacent a conductive bed, with transmission by the lower transmitter.

Fig. 21 illustrates current path lines for the same situation as in Figures 19 and 20, with currents from the two transmitters superposed.

Fig. 22 is a graph of resistivity versus depth for a series of conductive beds, with resistivity obtained using the compensated ring current of equation (2) in accordance with an embodiment of the invention.

Fig. 23 is a graph of resistivity versus depth for a series of resistive beds, with resistivity obtained using the compensated ring current of equation (2) in accordance with an embodiment of the invention.

Fig. 24 is a variation of the embodiment of Fig. 15 wherein a further monitor toroidal antenna is located adjacent the upper transmitter.

Fig. 25 illustrates a further embodiment having two button electrodes adjacent a monitor toroidal antenna.

Fig. 26 is a block diagram of a portion of the electronics in accordance with an embodiment of the invention.

Fig. 27 is a flow diagram of a routine for controlling a processor in accordance with an embodiment of the invention.

Fig. 28 is a block diagram of a portion of the electronics in accordance with another embodiment of the invention.

Fig. 29 is a schematic diagram, partially in block diagram form, of a further embodiment of the invention.

Fig. 30 is a diagram of the surface/local communications subassembly of the Fig. 1 bottom hole arrangement.

Fig. 31 is a block diagram, partially in schematic form, of the antenna and circuitry used in an embodiment of the local communications portion of the surface/local communications subassembly of Fig. 30.

Fig. 32 is a flow diagram of an embodiment of a routine for programming the processor of the Fig. 31 embodiment.

Fig. 33 is a diagram of another embodiment of the invention which utilizes electrodes mounted in a drill collar.

<u>DETAILED DESCRIPTION</u>

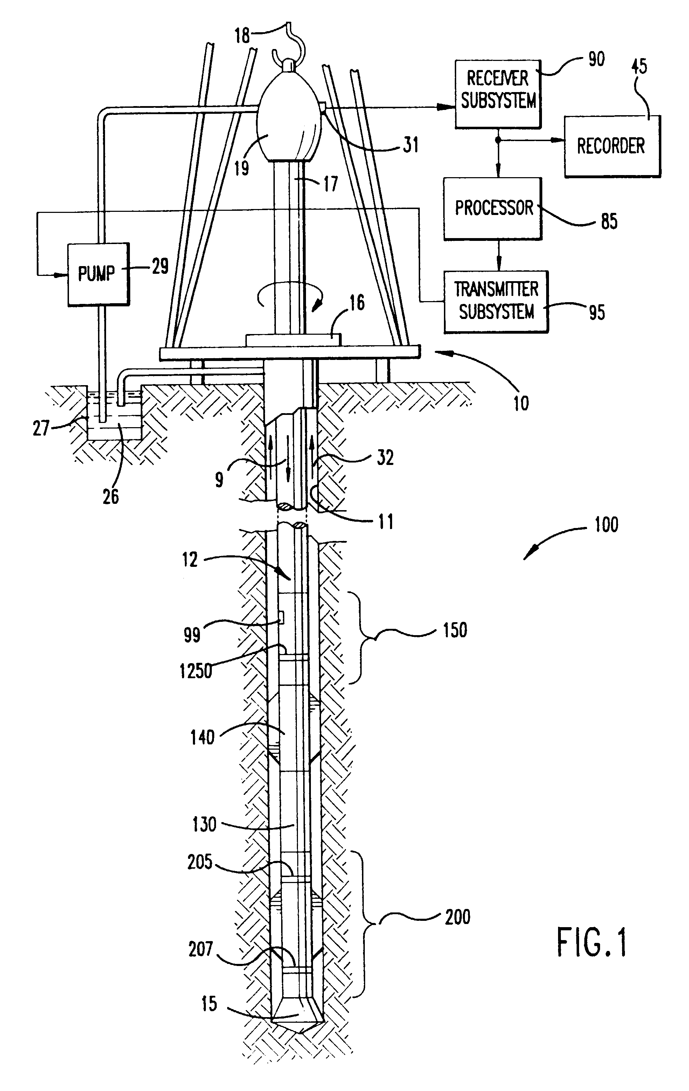

Referring to Fig. 1, there is illustrated a measuring-while-drilling apparatus in which embodiments of the invention can be employed. [As used herein, and unless otherwise specified, measurement-while-drilling (also called measuring-while-drilling or logging-while-drilling) is intended to include the taking of measurements in an earth borehole, with the drill bit and at least some of the drill string in the borehole, during drilling, pausing, and/or tripping.] A platform and derrick 10 are positioned over a borehole 11 that is formed in the earth by rotary drilling. A drill string 12 is suspended within the borehole and includes a drill bit 15 at its lower end. The drill string 12 and the drill bit 15 attached thereto are rotated by a rotating table 16 (energized by means not shown) which engages a kelly 17 at the upper end of the drill string. The drill string is suspended from a hook 18 attached to a travelling block (not shown). The kelly is connected to the hook through a rotary swivel 19 which permits rotation of the drill string relative to the hook. Alternatively, the drill string 12 and drill bit 15 may be rotated from the surface by a "top drive" type of drilling rig. Drilling fluid or mud 26 is contained in a pit 27 in the earth. A pump 29 pumps the drilling fluid into the drill string via a port in the swivel 19 to flow downward (arrow 9) through the center of drill string 12. The drilling fluid exits the drill string via ports in the drill bit 15 and then circulates upward in the region between the outside of the drill string and the periphery of the borehole, commonly referred to as the annulus, as indicated by the flow arrows 32. The drilling fluid thereby lubricates the bit and carries formation cuttings to the surface of the earth. The drilling fluid is returned to the pit 27 for recirculation. An optional directional drilling assembly (not shown) with a mud motor having a bent housing or an offset sub could also be employed.

Mounted within the drill string 12, preferably near the drill bit 15, is a bottom hole assembly, generally referred to by reference numeral 100, which includes capabilities for measuring, processing, and storing information, and communicating with the earth's surface. [As used herein, near the drill bit means within several drill collar lengths from the drill bit.] The assembly 100 includes a measuring and local communications apparatus 200 which is described further hereinbelow. In the example of the illustrated bottom hole arrangement, a drill collar 130 and a stabilizer collar 140 are shown successively above the apparatus 200. The collar 130 may be, for example, a pony collar or a collar housing measuring apparatus which performs measurement functions other than those described herein. The need for or desirability of a stabilizer collar such as 140 will depend on drilling parameters. Located above stabilizer collar 140 is a surface/local communications subassembly 150. The subassembly 150, described in further detail hereinbelow, includes a toroidal antenna 1250 used for local communication with the apparatus 200, and a known type of acoustic communication system that communicates with a similar system at the earth's surface via signals carried in the drilling fluid or mud. The surface communication system in subassembly 150 includes an acoustic transmitter which generates an acoustic signal in the drilling fluid that is typically representative of measured downhole parameters. One suitable type of acoustic transmitter employs a device known as a "mud siren" which includes a slotted stator and a slotted rotor that rotates and repeatedly interrupts the flow of drilling fluid to establish a desired acoustic wave signal in the drilling fluid. The driving electronics in subassembly 150 may include a suitable modulator, such as a phase shift keying (PSK) modulator, which conventionally produces driving signals for application to the mud transmitter. These driving signals can be used to apply appropriate modulation to the mud siren. The generated acoustic mud wave travels upward in the fluid through the center of the drill string at the speed of sound in the fluid. The acoustic wave is received at the surface of the earth by transducers represented by reference numeral 31. The transducers, which are, for example, piezoelectric transducers, convert the received acoustic signals to electronic signals. The output of the transducers 31 is coupled to the uphole receiving subsystem 90 which is operative to demodulate the transmitted signals, which can then be coupled to processor 85 and recorder 45. An uphole transmitting subsystem 95 is also provided, and can control interruption of the operation of pump 29 in a manner which is detectable by the transducers in the subassembly 150 (represented at 99), so that there is two way communication between the subassembly 150 and the uphole equipment. In existing systems, downward communication is provided by cycling the pump(s) 29 on and off in a predetermined pattern, and sensing this condition downhole. This or other technique of uphole-to-downhole communication can be utilized in conjunction with the features disclosed herein. The subsystem 150 may also conventionally include acquisition and processor electronics comprising a microprocessor system (with associated memory, clock and timing circuitry, and interface circuitry) capable of storing data from a measuring apparatus, processing the data and storing the results, and coupling any desired portion of the information it contains to the transmitter control and driving electronics for transmission to the surface. A battery may provide downhole power for this subassembly. As known in the art, a downhole generator (not shown) such as a so-called "mud turbine" powered by the drilling fluid, can also be utilized to provide power, for immediate use or battery recharging, during drilling. It will be understood that alternative acoustic or other techniques can be employed for communication with the surface of the earth.

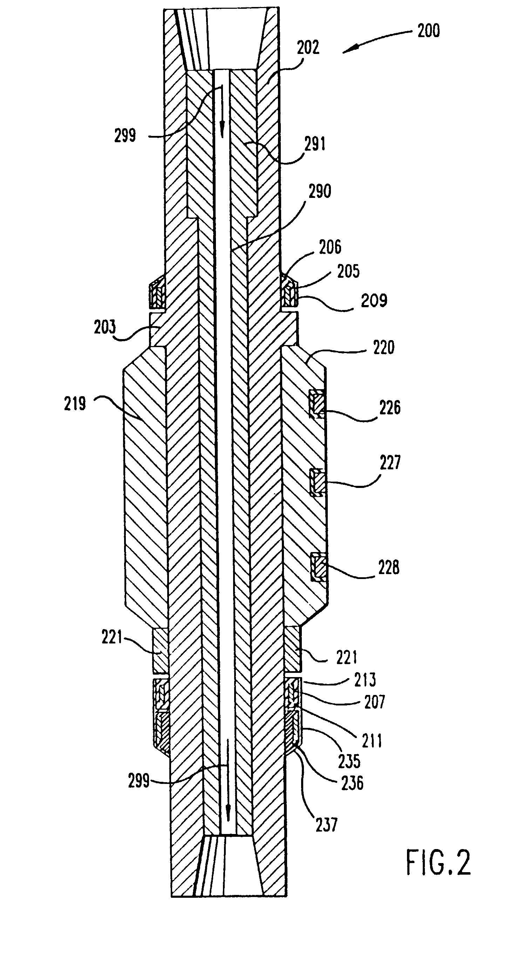

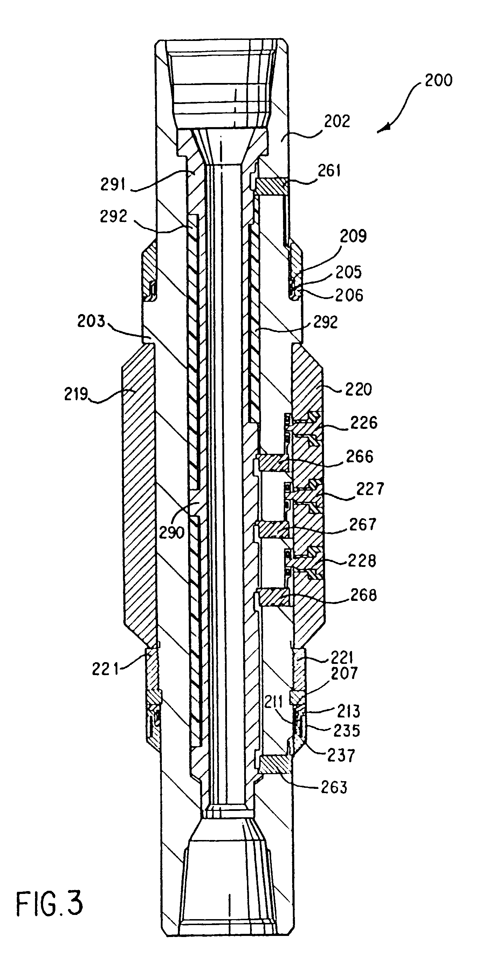

As seen in Fig. 2, the subsystem 200 includes a section of tubular drill collar 202 having mounted thereon a transmitting antenna 205, a receiving antenna 207, and receiving electrodes 226, 227, 228 and 235. In the present embodiment the transmitting antenna 205 comprises a toroidal antenna (see also Fig. 3) having coil turns wound on a ferromagnetic toroidal core that is axially coincident with the axis of the drill collar 202. The core may have a circular or rectangular cross-section, although other shapes can be used. The purpose of this toroidal transmitter is to induce a voltage along the drill collar. The drill collar and the formations correspond to a one turn secondary winding. If the transmitter is excited with a drive voltage $V_T$ and the transmitter toroid has $N_T$ turns, then the voltage induced along the drill collar will be $V_T/N_T$. That is, the voltage difference between the drill collar above the transmitter and the drill collar below the transmitter will be $V_T/N_T$. The resultant current travels in a path that includes the drill string and the formations (as well as the borehole fluid which is assumed to have substantial conductivity). The receiving electrodes 226, 227 and 228 are button electrodes mounted in a stabilizer 220, and electrode 235 is a ring electrode. The receiving antenna 207 is another toroidal coil antenna. The toroidal receiver measures the axial current flowing through the drill collar. If the receiver toroid contains $N_R$ turns and the current in the drill collar is I, then the current flowing through the receiver winding into a short circuit will be $I/N_R$.

Referring now also to Fig. 3 as well as Fig. 2, there are illustrated further details of the structure of the measurement and communication subsystem 200 that is housed in the drill collar 202. An annular chassis 290, which contains most of the electronics, fits within the drill collar 202. In this embodiment, the drilling mud path is through the center of the chassis, as illustrated by arrows 299 (Fig. 2). The chassis 290 has a number of slots, such as for containment of batteries (at position 291, see Fig. 2) and circuit boards 292. In the disclosed embodiment, the circuit boards are in the form of elongated thin strips, and can accordingly be planar. Other circuit board configurations or circuit packaging can be utilized. The transmitting toroidal antenna 205 [which can also be utilized in a communications mode as a receiver] is supported in a suitable insulating medium, such as "VITON" rubber 206. The assembled coil, in the insulating medium, is mounted on the collar 202 in a subassembly which includes a protective tapered metal ring 209, that is secured to the collar surface by bolts (not shown). The antenna wiring, and other wiring, is coupled to the annular circuit assembly via bulkhead feed-throughs, as represented at 261 (for wiring to antenna 205), 266, 267, 268 (for wiring to electrodes 226, 227 and 228, respectively), and 263 (for wiring to electrode 235 and antenna 207). The receiving toroidal coil antenna 207 is constructed in generally the same way, although with more coil turns in the present embodiment, in insulating medium 211, and with protective ring 213. The receiving ring electrode 235 is also mounted in an insulating medium such as a fiberglass-epoxy composite 236, and is held in a subassembly that includes tapered ring 237, which can be integrated with the protective ring for the receiving antenna 207.

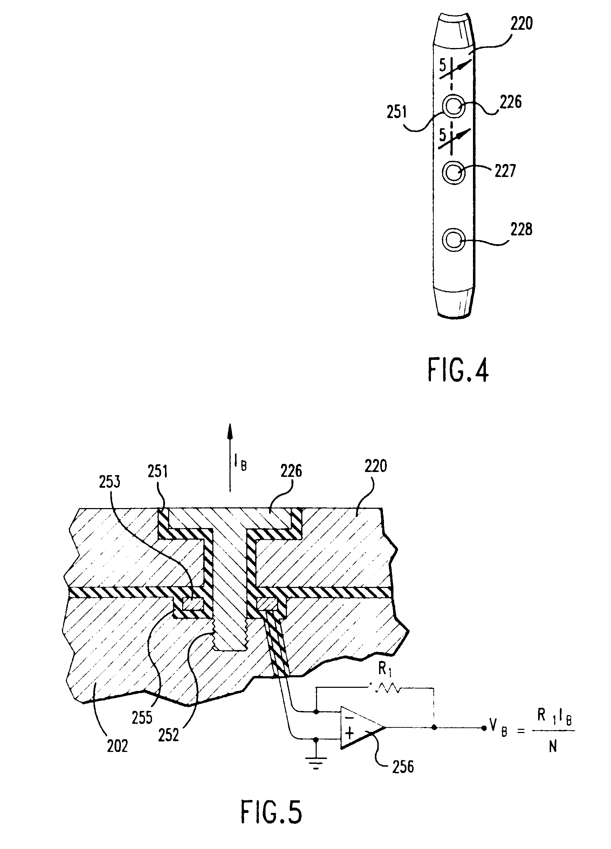

The three button electrodes 226, 227 and 228 are provided in stabilizer blade 220 which may have, for example, a typical straight or curved configuration. [The electrodes can alternatively be mounted in the drill collar itself.] Two of four (or three) straight stabilizer blades 219 and 220 are visible in Fig.s 2 and 3. The stabilizer blades are formed of steel, integral with a steel cylindrical sleeve that slides onto the drill collar 202 and abuts a shoulder 203 formed on the drill collar. The stabilizer is secured to collar 202 with lock nuts 221. The blades can be undersized to prevent wear of the electrodes. The button electrode faces have generally round (in this case, circular) peripheries which will be generally adjacent the borehole wall. The button faces can have generally cylindrical curvatures to conform to the stabilizer surface or can have flat faces with surfaces that are slightly recessed from the stabilizer surface shape. These electrodes span only a small fraction of the total circumferential locus of the borehole and provide azimuthal resistivity measurements. Also, these electrodes have a vertical extent that is a small fraction of the vertical dimension of the stabilizer on which they are mounted, and provide relatively high vertical resolution resistivity measurements. In the illustrated embodiment, the surfaces of electrodes 226, 227 and 228 have diameters of about 1 inch (about 2.5 cm.), which is large enough to provide sufficient signal, and small enough to provide the desired vertical and azimuthal measurement resolution. The electrode periphery, which can also be oval, is preferably contained within a circular region that is less than about 1.5 inches (about 3.8 cm.) in diameter. In the present embodiment, the top portion of each electrode is surrounded by an insulating medium, such as "VITON" rubber, which isolates the electrode surface from the surface of the stabilizer blade 220. A fiberglass epoxy composite can be used around the base of the electrode. The electrodes 226, 227 and 228 (see also Fig. 4) provide a return path from the formations to the collar 202 (of course, when the AC potential reverses the current path will also reverse), and the current is measured to determine lateral resistivity of the region of the formation generally opposing the electrode. The electrodes 227 and 228 are respectively further from the transmitter than the electrode 226, and will be expected to provide resistivity measurements that tend to be respectively deeper than the measurement obtained from electrode 226. The electrodes are mounted in apertures in the stabilizer 220 that align with apertures in the drill collar 202 to facilitate coupling of the electrodes to circuitry in the annular chassis 290.

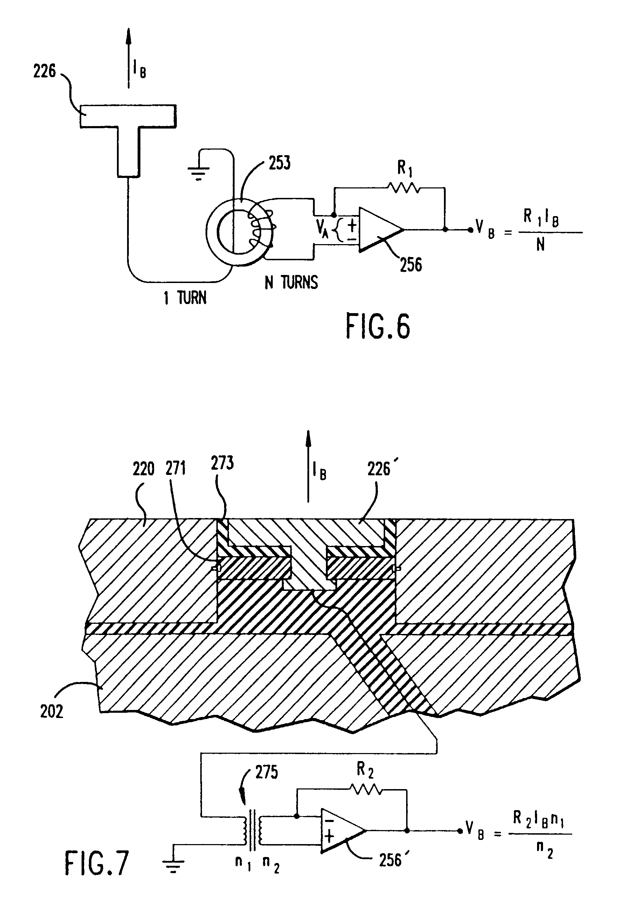

In one electrode configuration, the electrode body is directly mounted, in the manner of a "stud", in the stabilizer body. As seen in Fig. 5 (and also in Fig. 3), the metal button electrode (226, for example) is mounted in an insulating medium 251, such as "VITON" rubber, and its neck portion engages threading 252 in collar 202. A small toroidal coil 253 is seated in an insulating medium 255, which can also be "VITON" rubber, in a circular recess in the collar surface. The toroidal coil 253 is used to sense current flow in the electrode 226. The leads from coil 253 pass through a bulkhead feed-through (see Fig. 3) to circuitry shown in Fig. 5. In particular, one conductor from the current sensing toroidal coil 253 is coupled to the inverting input of an operational amplifier 256. The other conductor from toroidal coil 253, and the non-inverting input of operational amplifier 256, are coupled to ground reference potential; e.g. the body of drill collar 202. A feedback resistor $R_1$ is provided between the output and the inverting input of operational amplifier 256. The circuit equivalent is illustrated in Fig. 6 which shows the button electrode stud as a single turn through the core of toroidal coil 253, the number of turns in the coil being N. The gain of operational amplifier 256 is very high, and $V_A$, the voltage difference between the inverting and non-inverting input terminals is very small, virtually zero. The input impedance of the operational amplifier is very high, and essentially no current flows into either input terminal. Thus, if the current flow in the electrode 226 is $I_B$, and the current flow in the toroidal coil "secondary" is $I_B/N$, the current $I_B/N$ flows through the feedback resistor $R_1$, making the amplifier output voltage $R_1 I_B/N$.

Referring to Fig 7, there is shown a diagram of a further embodiment of a button electrode that can be utilized in a form of the present invention. In this embodiment, the electrode body (e.g. 226') is supported on an insulating mounting frame 271 formed of a material such as epoxy fiberglass composite, and is sealed with "VITON" rubber insulating material 273. The electrode is coupled, via a bulkhead feed-through, to one end of the primary coil of a transformer 275, the other end of which is coupled to ground reference potential (e.g., the collar body). The secondary winding of transformer 275 is coupled to the inputs of an operational amplifier 256' which operates in a manner similar to the operational amplifier 256 of Fig.s 5 and 6. A feedback resistor $R_2$ is coupled between the output of the operational amplifier 256' and its inverting input, and the output is designated $V_B$. Derivation of the output voltage as a function of the electrode current $I_B$ is similar to that of the circuit of Fig. 6, except that in this case the turns ratio, secondary to primary, is $n_2/n_1$, and the expression for the output voltage is $V_B = R_2 I_B n_1/n_2$. An advantage of this electrode arrangement and circuit is that $n_1$ can be increased to increase the output voltage sensitivity to the current being measured.

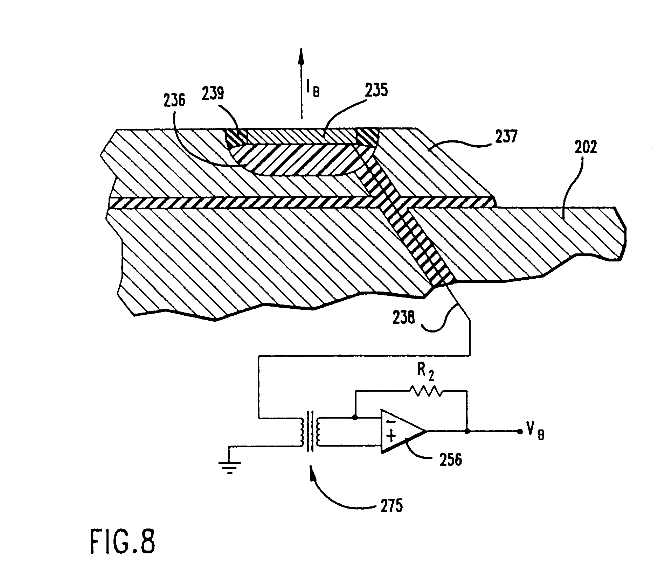

Fig. 8 illustrates a form of the ring electrode 235 utilized in the Fig. 2 embodiment. The ring electrode, which can be welded into a single piece, is seated on fiberglass-epoxy insulator 236, and is sealed with viton rubber 239. A conductor 238 that can be brazed or welded to the ring electrode 235, is coupled, via a feed-through, to circuitry similar to that of Fig. 7, with a transformer 275, an operational amplifier 256, a feedback resistor $R_2$, and an output $V_B$. The current sensing operation of this circuit is substantially the same as that of the Fig. 7 circuit.

Apparent resistivity of the formation is inversely proportional to the current I measured at the electrode. If the voltage at the electrode relative to the voltage of the drill collar surface above the toroidal coil transmitter coil 205 is V, the apparent resistivity is $R_{app} = kV/I$, where k is a constant that can be determined empirically or by modeling. If desired, a correction can be applied to compensate for electromagnetic skin effect.

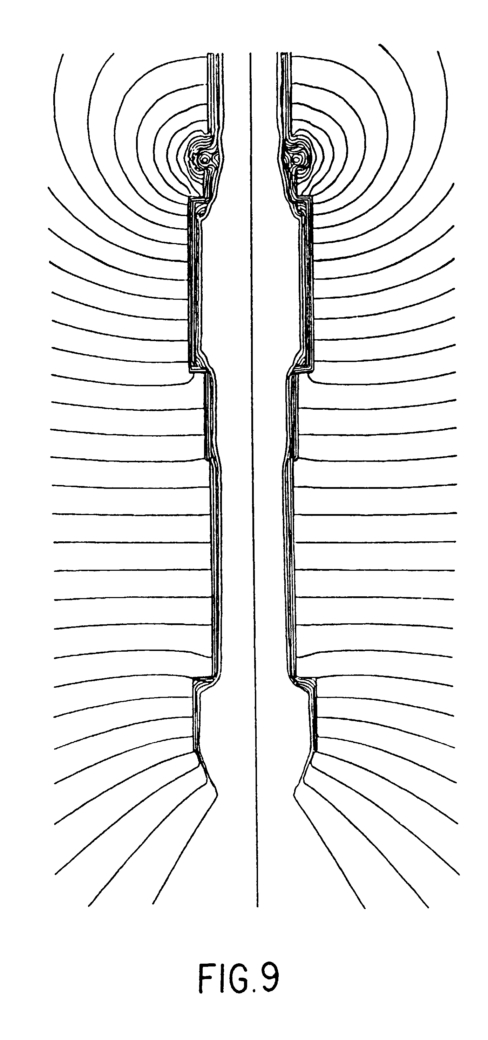

Fig. 9 shows a general representation of the known type of current pattern that results from energizing the transmitter toroidal coil in a well being drilled with mud having substantial conductivity. The pattern will, of course, depend on the formations' bed pattern and conductivities, the example in Fig. 9 being for the simplified case of uniform conductivity.

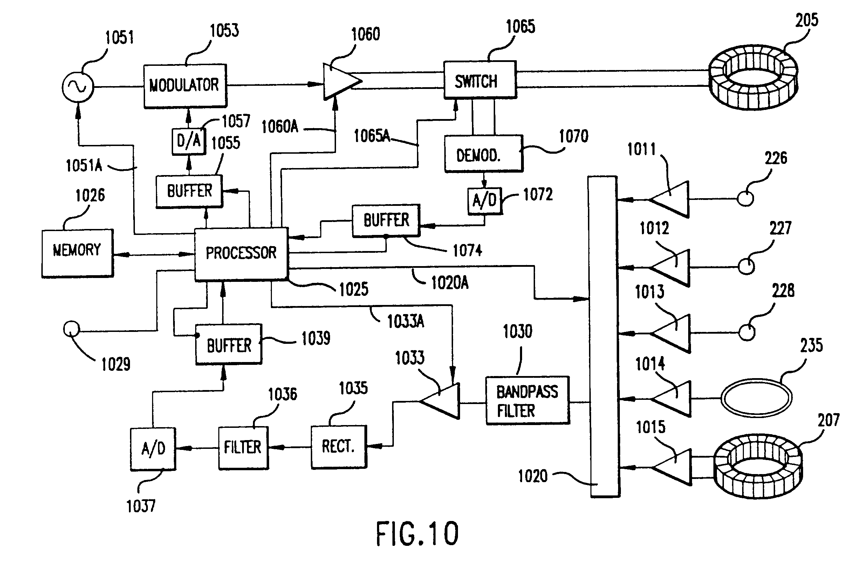

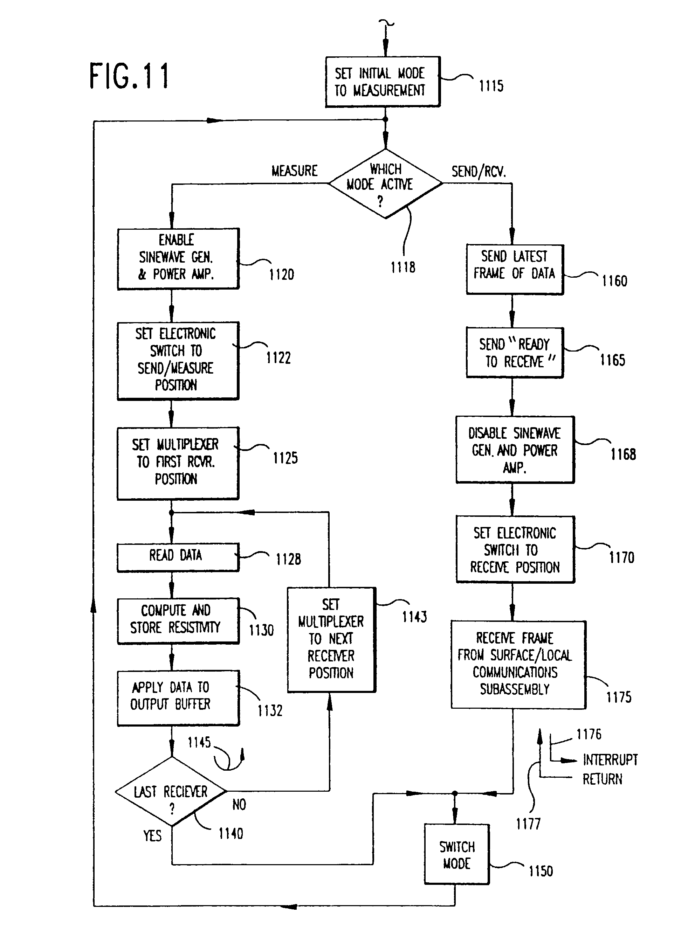

Fig. 10 shows a block diagram of an embodiment of downhole circuitry in subassembly 200 for implementing measurements and/or for transmitting information to the surface/local communications subassembly 150. The button electrodes 226, 227 and 228 and ring electrode 235 are each coupled, via the previously described sensing and amplification circuits (e.g. Fig.s 5-8, now referred to by reference numerals 1011-1014, respectively), to a multiplexer 1020. The output of the receiver toroidal coil 207 is also coupled, via a sensing and amplification circuit 1015, to the multiplexer 1020. The multiplexer 1020 is under control of a computer or processor 1025, as represented by the line 1020A. The processor 1025 may be, for example, a suitable digital microprocessor, and includes memory 1026, as well as typical clock, timing, and input/output capabilities (not separately represented). The processor can be programmed in accordance with a routine illustrated in Fig. 11. The output of multiplexer 1020 is coupled, via a bandpass filter 1030, to a programmable gain amplifier 1033, the gain of which can be controlled by the processor 1025 via line 1033A. The output of amplifier 1033 is coupled to a rectifier 1035, a low-pass filter 1036, and then to an analog-to-digital converter 1037, the output of which is coupled to the processor 1025 via a buffer 1039 that is controlled by the processor. [This and other buffers can be part of the processor memory and control capability, as is known in the art.] The bandpass filter 1030 passes a band of frequencies around the center frequency transmitted by the transmitter toroidal coil 205. The processor 1025 controls the multiplexer 1020 to select the different receiver outputs in sequence. The gain of programmable amplifier 1033 can be selected in accordance with the receiver being interrogated during a particular multiplexer time interval and/or in accordance with the received signal level to implement processing within a desired range. The amplified signal is then rectified, filtered, and converted to digital form for reading by the processor 1025.

In the present embodiment, the transmitter of subassembly 200 can operate in two different modes. In a first mode, the transmitter toroidal coil 205 transmits measurement signals, and the signals received at the electrodes and the receiver toroidal coil are processed to obtain formation measurement information. In a second mode of operation, the transmitter toroidal coil 205 is utilized for communication with the transmitter/receiver in the surface/local communications subassembly 150 (Fig. 1).

A sinewave generator 1051, which may be under control of processor 1025 (line 1051A) is provided and has a frequency, for example, of the order of 100 Hz to 1M Hz, with the low kilohertz range being generally preferred. In one operating embodiment, the frequency was 1500 Hz. The generated sinewave is coupled to a modulator 1053 which operates, when the system is transmitting in a communications mode, to modulate the sinewave in accordance with an information signal from the processor 1025. The processor signal is coupled to modulator 1053 via buffer 1055 and digital-to-analog converter 1057. In the illustrated embodiment the modulator 1053 is a phase modulator. The output of modulator 1053 is coupled to a power amplifier 1060, which is under control of processor 1025 (line 1060A). The output of power amplifier 1060 is coupled, via electronic switch 1065, to the transmitter toroidal coil antenna 205. Also coupled to the toroidal coil antenna 205, via another branch of electronic switch 1065, is a demodulator 1070 which, in the present embodiment is a phase demodulator. The output of demodulator 1070 is, in turn, coupled to analog-to-digital converter 1072 which is coupled to the processor 1025 via buffer 1074. The processor controls electronic switch 1065, depending on whether the toroidal coil antenna 205 is to be in its usual transmitting mode, or, occasionally, in a receiving mode to receive control information from the surface/local communications subassembly 150.

Referring to Fig. 11, there is shown a flow diagram of a routine for programming the processor 1025 in accordance with an embodiment of the invention. In the example of the routine set forth, functions are performed or controlled in a repetitive sequential fashion, but the program may alternatively be set up with a routine that handles the indicated tasks on a prioritized basis, or with a combination of sequential and prioritized functions. Also, the processor may be multi-ported or multiple processors may be used. The routine has two basic modes; a "measurement" mode wherein the toroidal coil antenna 205 is transmitting for the purpose of obtaining measurement signals at the receiving electrodes 226-228 and 235 and the receiving toroidal coil antenna 207, and a "local communications" mode wherein the toroidal coil antenna 205 is utilized to transmit and/or receive modulated information signals to and/or from a toroidal coil antenna located in the surface/local communications subassembly 150 (Fig. 1), for ultimate communication with equipment at the earth's surface via mud pulse telemetry equipment which is part of the subassembly 150. The block 1115 represents the initializing of the system to the measurement mode. Inquiry is then made (diamond 1118) as to which mode is active. Initially, as just set, the measurement mode will be active, and the block 1120 will be entered, this block representing the enabling of the sinewave generator 1051 and the power amplifier 1060 (Fig. 10). The electronic switch 1065 is then set to the measurement/send position (block 1122) [i.e., with the toroidal coil antenna 205 coupled to the power amplifier 1060], and the multiplexer 1020 is set to pass information from the first receiver (block 1125), for example the closest button electrode 226. The data is then read (block 1128) and the resistivity, as measured by the electrode from which the data has passed, is computed [for example in accordance with the relationships set forth above in conjunction with Fig.s 5-8] and stored (block 1130), and can be sent to output buffer 1055 (block 1132). Inquiry is then made (diamond 1140) as to whether the last receiver has been interrogated. If not, the multiplexer 1020 is set to pass the output of the next receiver (for example, the button electrode 227), as represented by the block 1143. The block 1128 is then re-entered, and the loop 1145 continues until data has been obtained and processed from all receivers. When this is the case, the operating mode is switched (block 1150), and inquiry is made as to which mode is active. Assuming that the local communications mode is now active, the block 1160 is entered, this block representing the transmission of the latest frame of data to the main communications subassembly. In particular, data from the processor 1025 (or from the optional buffer 1055) is coupled to the modulator 1053 to modulate the sinewave output of generator 1051 for transmission by antenna 205. At the end of a frame of data, a "ready to receive" signal can be transmitted (block 1165). The sinewave generator and power amplifier are then disabled (block 1168), and the electronic switch 1065 is set to the "receive" position. [i.e., with the toroidal coil antenna 205 coupled to the demodulator 1070] (block 1170). A frame of information can then be received via buffer 1074, as represented by the block 1175. During this time, as represented by the arrows 1176 and 1177, other processor computations can be performed, as desired. The block 1150 can then be re-entered to switch the operating mode, and the cycle continues, as described. The information received from the surface/local communications subassembly can be utilized in any desired manner.

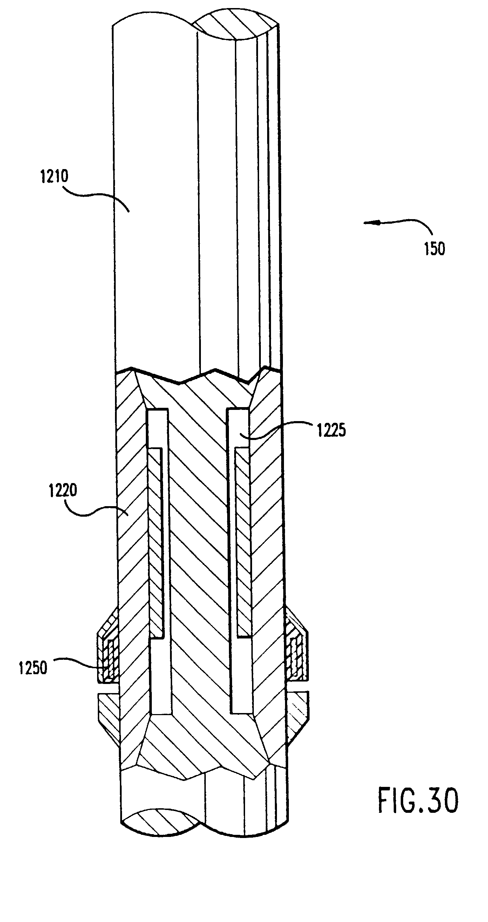

It will be understood that the routine set forth is illustrative, and other suitable routines will occur to those skilled in the art. Also, other suitable communications techniques can be employed, if desired. For example, simultaneous measurement and communication, such as at different frequencies, could be employed while still using a single transmitting antenna. Of course, local communication by wire conductor may be preferred in some situations, if available, and an output port 1029 (Fig. 10) can be provided for this purpose, or as a general read-out port. Further detail of the communications system is provided in conjunction with Figures 30-33 below.

In general, the resistivity obtained from the electrodes in the previously described manner is an accurate indication of the resistivity of formations in the region immediately surrounding the electrode, but under certain conditions this may not be the case. As noted above, Applicant recognizes that the measurement at an electrode in the described type of system is, at least to some degree, determined by the total current distribution into the overall body of the apparatus which, in the described system, is the drill collar and the conductive drill string coupled therewith. The total current distribution, in turn, depends to some extent on the formation resistivity along the entire length of the drill string. A problem arises when the current measured at the indicated electrode(s) is affected to a substantial degree by formations a meaningful distance from the region of the electrode, and such formations have resistivities that are different than the resistivity of the formations in the region of the electrode(s). For example, a problem occurs in the logging-while-drilling apparatus when the measuring electrode(s) is traversing a resistive bed and the drill bit cuts into a more conductive bed. When this happens the current being emitted from the electrode decreases, falsely indicating a more resistive formation in the region of the electrode. As described further below, other conditions can give rise to errors in resistivity indications.

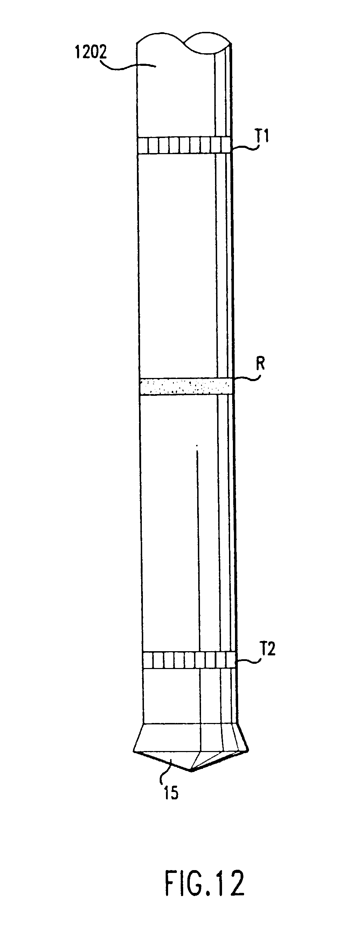

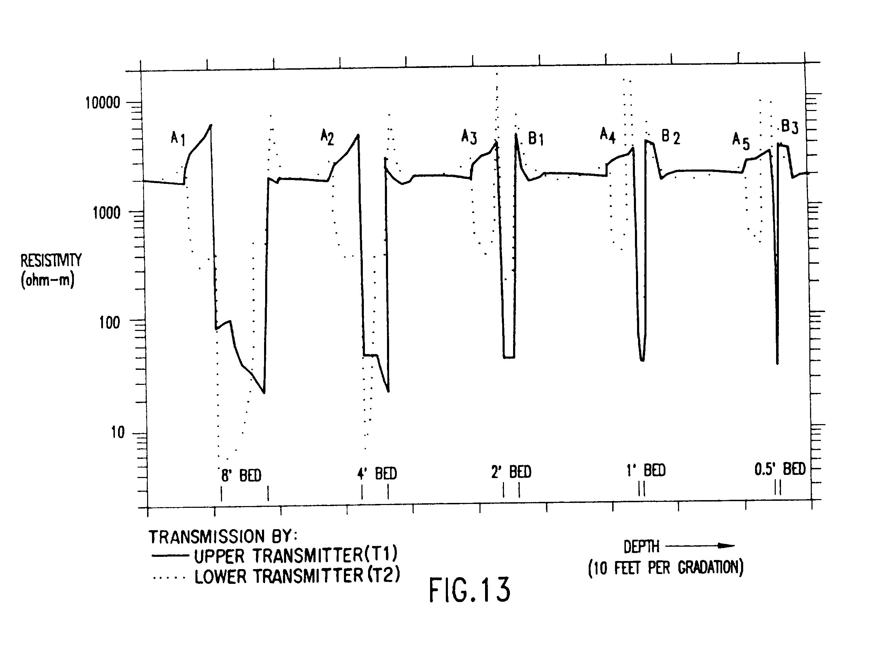

Consider the arrangement of Fig. 12, which has a toroidal transmitter T1 and a ring electrode R on a conductive body 1202 which is like the drill collar 202 in a logging-while-drilling setup of the general type shown in Figures 1-3. A further toroidal transmitter T2, also called a lower transmitter, is located near the drill bit. For this example, the lower transmitter T2 is about 24 inches from the end of the bit 15, the upper transmitter T1 is about 84 inches from the end of the bit, and the ring electrode is equidistant from the transmitters, i.e., about 54 inches from the end of the bit. The logging device is assumed to be in a formation of resistivity 2000 ohm-m having a bed of resistivity 20 ohm-m and a specified thickness. Simulated resistivity logs for five such bed thicknesses [8, 4, 2, 1 and 0.5 feet] are shown left-to-right in Fig. 13. [This and other simulated logs hereof are computed without consideration of borehole effect, which will be small if the transmitter-to-electrode spacing is larger compared to the standoff between the electrode and the borehole wall.] The simulated resistivity logs, as a function of the depth of ring R, are computed for transmission by the upper transmitter T1 (solid line) and by the lower transmitter T2 (dotted line). [As above, resistivity is inversely proportional to the measured ring current.] For operation with the upper transmitter, relatively large horn-shaped artifacts labelled A1 through A5 can be observed to occur when the logging tool enters the bed; that is, in this case, when the bit first cuts into the bed. The length of this artifact is approximately equal to the distance from the ring to the bit. There is also an artifact on the lower side of the bed for the thin beds, labelled B1 through B3. This artifact has a length approximately equal to the transmitter-ring spacing minus the bed thickness and so is absent for thick beds greater in extent than the transmitter receiver distance. The simulated ring resistivity computed when the lower transmitter is active (dotted line) has initial artifacts which roughly oppose A1 through A5, and other serious distortions.

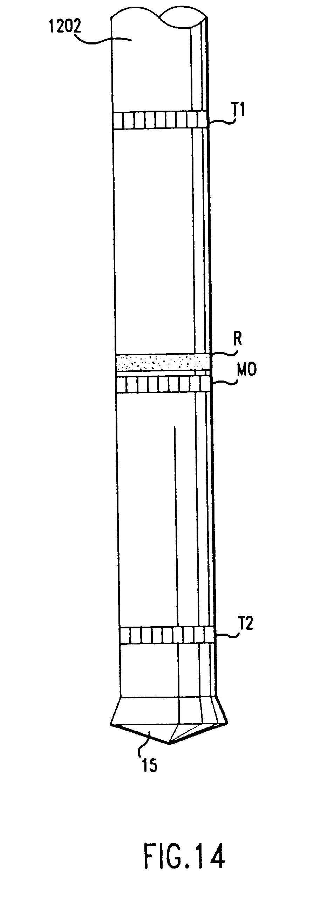

Consider next the arrangement of Figure 14, which is like that of Figure 12, but also has a receiver (or monitor) toroid M0 at about the position of the ring electrode R to monitor the axial current flowing up or down through the conductive body at the position of the ring R. The axial current which is induced by T1 is linear with respect to the voltage induced on the drill collar and inverse to the resistivity of the earth formation surrounding the tool. The axial current which is induced by T2 is linear with respect to the voltage induced on the drill collar by T2 and inverse to the resistivity of the earth formation surrounding the tool. Assume that the excitation voltage of the upper transmitter is fixed while the excitation voltage of the lower transmitter is adjustable. The net axial current which flows along the drill collar at any point is the linear superposition of the induced current from T1 and T2. Assume that the voltage of T2 can be adjusted so that the net axial current flowing through the monitor toroid M0 is zero. This will require that the current induced by T2 be approximately opposite in phase to the current induced by T1, so that when the upper transmitter is driving current down the tool, the lower transmitter is driving the current up, and vice versa. All of the current leaving the tool between the lower transmitter and the monitor returns to the tool below the lower transmitter while all of the current leaving the tool between the upper transmitter and the monitor returns to the tool above the upper transmitter. This has the effect of isolating the region of the tool above the monitor from the region of the tool below the monitor since no current flows between them, either on the collar or through the formation. As a result, the resistivity determined from the ring current more accurately represents the resistivity of formations surrounding the ring R.

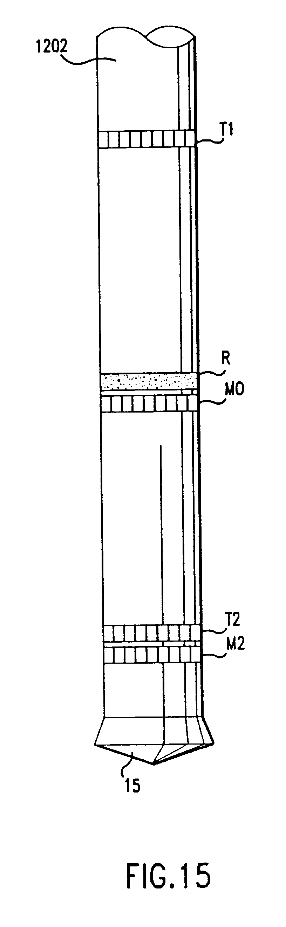

A similar result can be obtained by energizing the transmitters separately and computing a compensated ring current. In the arrangement of Fig. 14 [or that of Fig. 15, which includes a lower receiving or monitoring toroid M2, to be subsequently considered], the upper position is designated 1, the lower position is designated 2, and the center position is designated 0. The ring and toroid currents when the upper transmitter is operated at an arbitrary but fixed voltage are $R_1$, $M_{01}$, and $M_{21}$ and the ring and toroid currents when the lower transmitter is operated at the same voltage are $R_2$, $M_{02}$, and $M_{12}$. Consider a compensated current of the form:

$$R_c = \frac{1}{M_{02}}(M_{02}R_1 + M_{01}R_2) \qquad (1)$$

or

$$R_c = R_1 + \frac{M_{01}}{M_{02}}R_2 \qquad (1a)$$

In equation (1a), the ratio $M_{01}/M_{02}$ is the adjustment factor for the lower transmitter to achieve the condition of zero axial current at M0. The expression $R_1 + M_{01}/M_{02}R_2$ is the ring current for the condition of zero axial current.

The two terms in equation (1a) add. This is due to the fact that operating the two transmitters in opposition in order to achieve a zero axial current at the monitor toroid causes an increase in the ring current. That is, when the upper transmitter drives a current down the mandrel, current flows out of the ring. Similarly when the lower transmitter drives current up the mandrel, it also causes current to flow out of the ring. The implication of this processing on the noise is that, since the terms add, the noise in the output is not amplified as would be the case if one took a small difference between two large numbers.

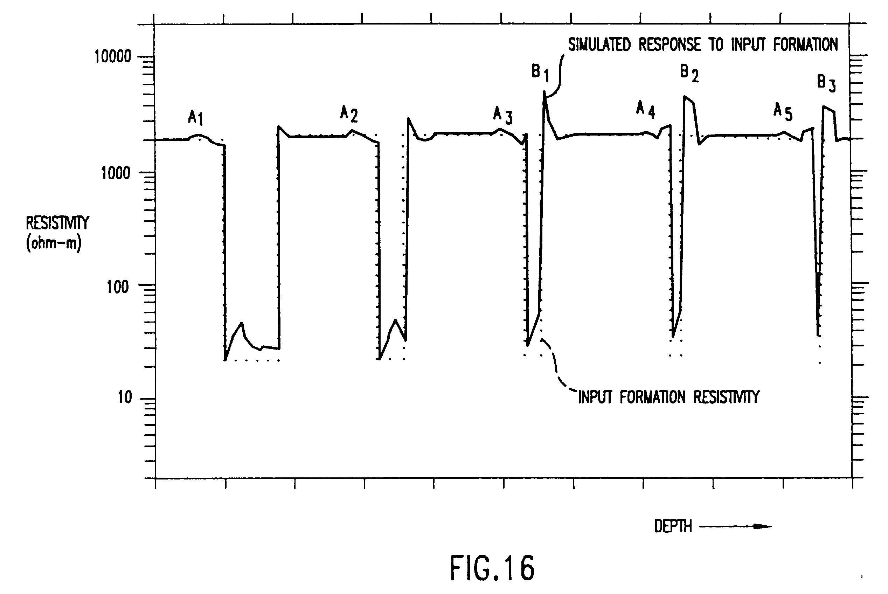

Fig. 16 shows the response [resistivity, inversely proportional to compensated ring current] for the same beds as in Fig. 13. The artifact A1 through A5 (of Fig. 13), which occurs as the tool enters the bed, is greatly reduced. The smaller artifact B1 through B3 on the downside of the thinner beds is almost unchanged. The shape of the log within the bed is improved, but could still stand improvement.

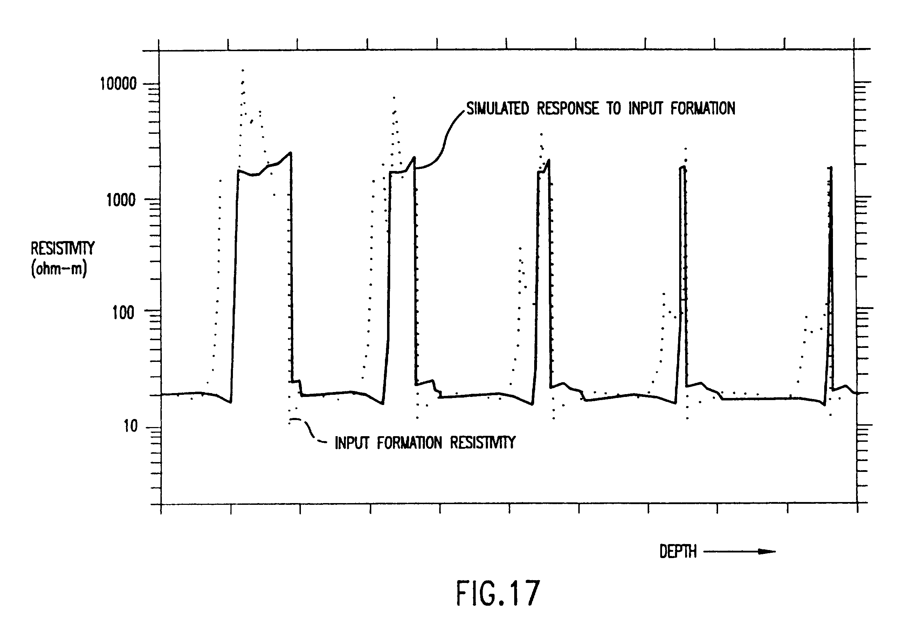

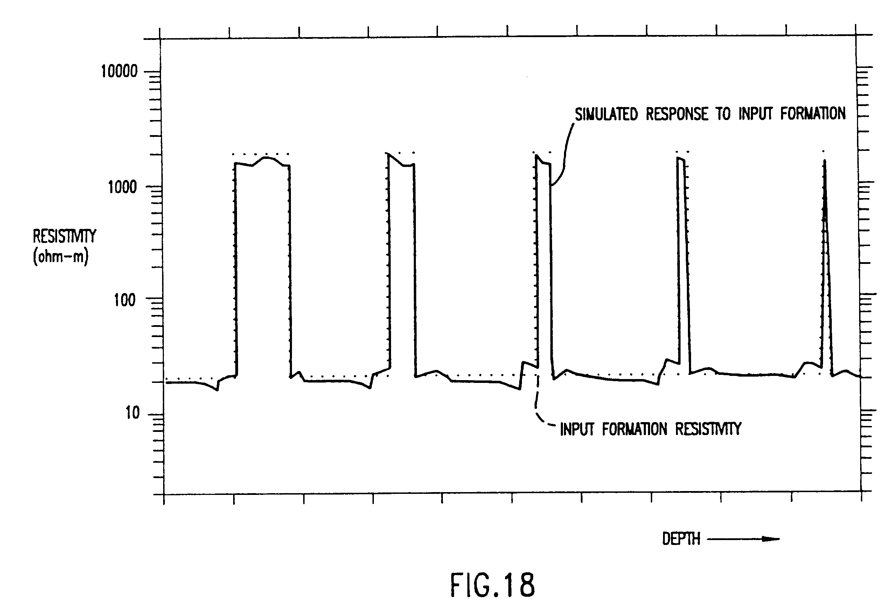

Figures 13 and 16 illustrate performance when relatively conductive beds are encountered. Figures 17 and 18 illustrate performance in thin beds that are more resistive than the formations in which they are located. The contrast ratio is again 100 to 1 (2000 ohm-m beds in 20 ohm-m formations). Fig. 17 shows that in this case the uncompensated log using the upper transmitter is reasonably good without compensation, and Fig. 18 shows the improvement using the indicated compensation of equation (1).

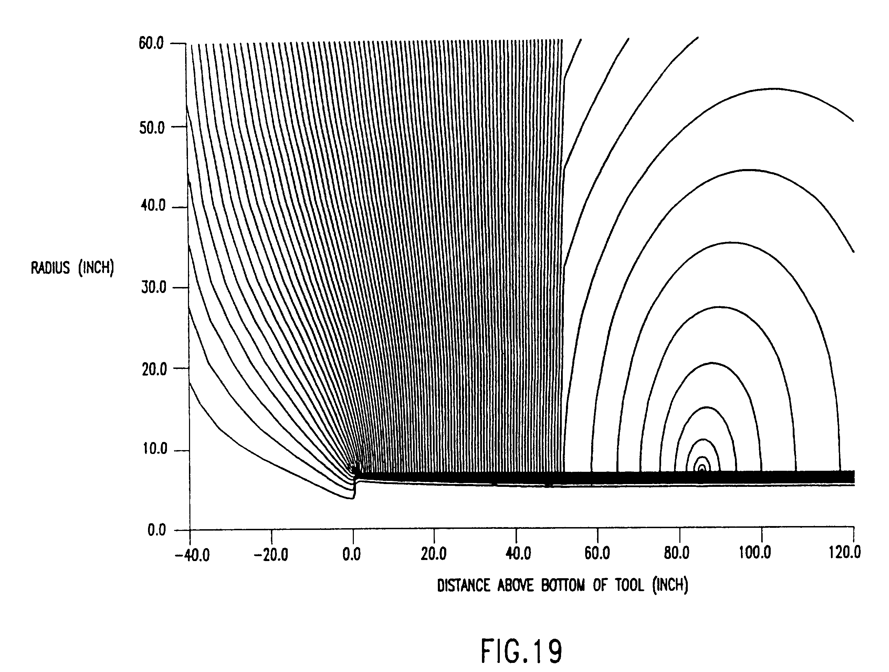

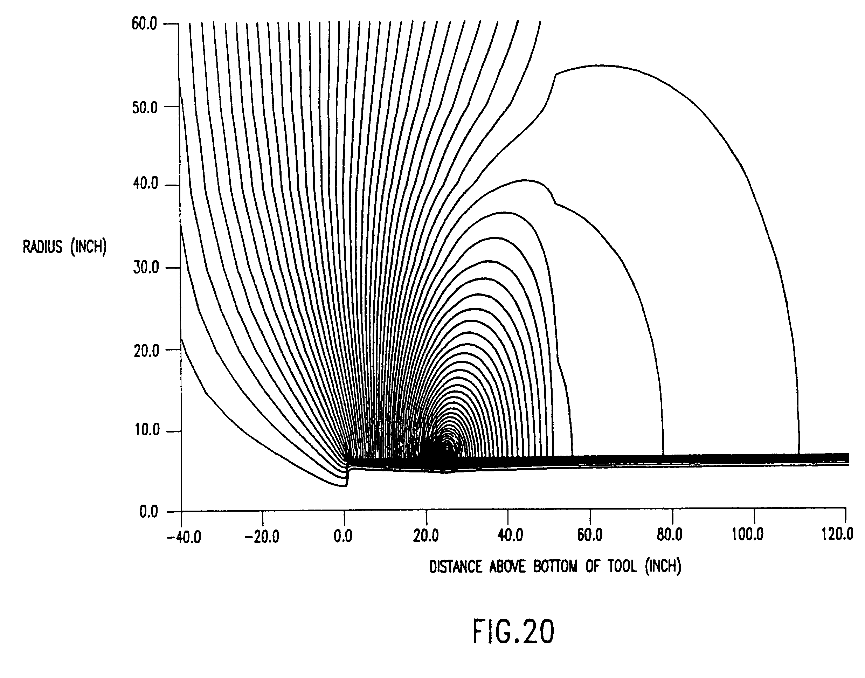

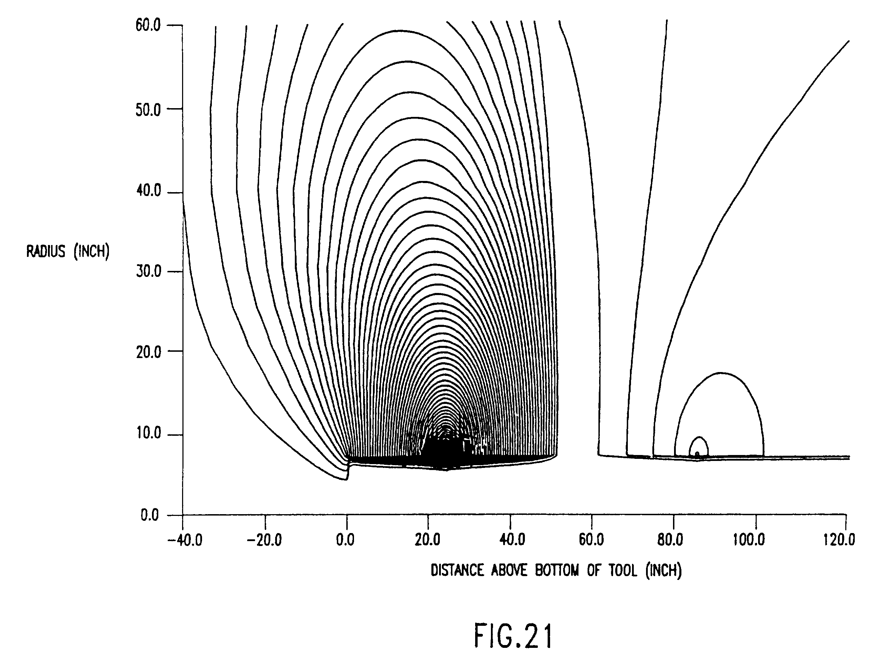

To better understand the compensation approach, reference can be made to Figures 19, 20, and 21, which illustrate current path lines for a tool just above an 8 foot thick conductive bed. In Fig. 19 transmission is from the upper transmitter (at 84 inches on the depth scale) and the ring electrode is just above the bed boundary (the ring electrode being at 54 inches on the depth scale), the resistivity contrast ratio being 10 to 1. [A lower contrast ratio than before is used to facilitate visualization of the current line plots.] It is seen in Fig. 19 that the current lines emerge from the bed and curve upward into the more resistive shoulder. This distortion accounts for the horn-shaped artifacts such as A1 in Fig. 13. Fig. 20 shows the same situation, but with transmission from the lower transmitter, T2. Fig. 21 illustrates the compensated situation, with current from the two transmitters superposed. The current paths near the borehole at about the position of the ring are substantially parallel to the bed and are not distorted by the presence of the bed. The fact that the current paths are substantially independent of the presence of the bed below the ring electrode explains the improved response.

The monitor toroid M0 should preferably be at substantially the same position as the ring electrode R to obtain excellent compensation. [An arrangement of ring, toroid, and protective covering ring, as first shown above in Fig. 3, will effectively put a ring and toroid receiver at substantially the same receiver position.] However, even if there is some distance between them, improvement will be realized from the indicated compensation.

The condition of zero axial current at the monitor M0 fixes the ratio of the voltages generated by transmitter T1 and transmitter T2 or, equivalently, the ratio of factors to be applied to the respective ring currents $R_1$ and $R_2$. It does not set the overall level of the transmitter voltages. Choice of the prefactor as $1/M_{02}$ corresponds to a fixed voltage at T1 and a voltage at transmitter T2 of $M_{01}/M_{02}$. This can be seen from equation (1a). If instead of $1/M_{02}$ one uses a prefactor of $1/M_{01}$, this corresponds to the lower transmitter producing a fixed voltage, while the upper transmitter produces a voltage $M_{02}/M_{01}$ times as large. In this case, one is trying to electrically remove the effect of the upper portion of the tool. This produces an inferior log from what corresponds to a short asymmetrical tool with poor response.

At present, the most preferred multiplying factor is $1/M_{21}$, where $M_{21}$ is the current produced by the upper transmitter measured at the lower monitor toroid M2 (which is at substantially the same position as the lower toroidal transmitter T2 - see Fig. 15). [By reciprocity, $M_{21}$ is equal to the current $M_{12}$ that would be produced by the lower transmitter measured at an imaginary monitor $M_1$ located at the position of the upper transmitter.] Logs produced using this compensation, that is, with the compensated ring current

$$R_c = \frac{1}{M_{21}}(M_{02}R_1 + M_{01}R_2) \qquad (2)$$

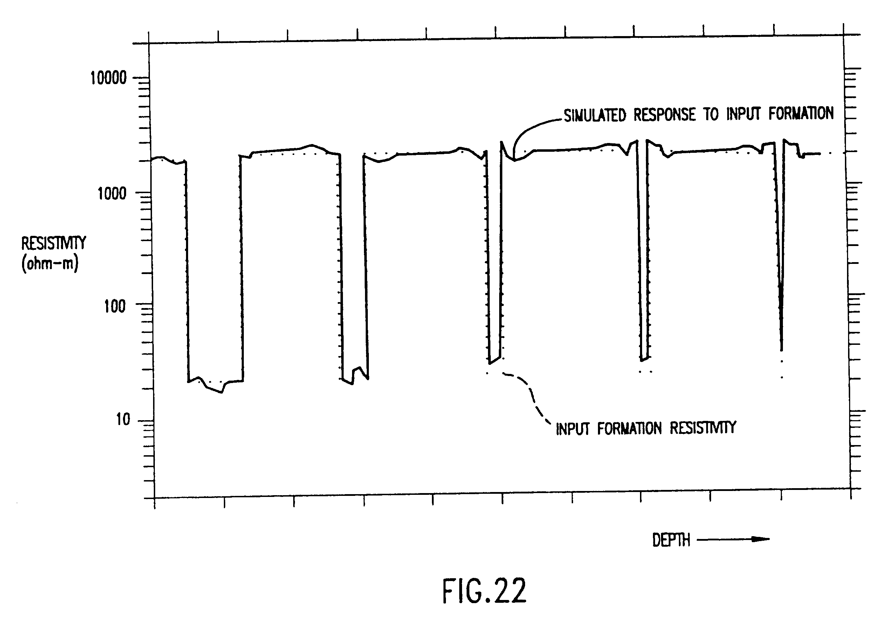

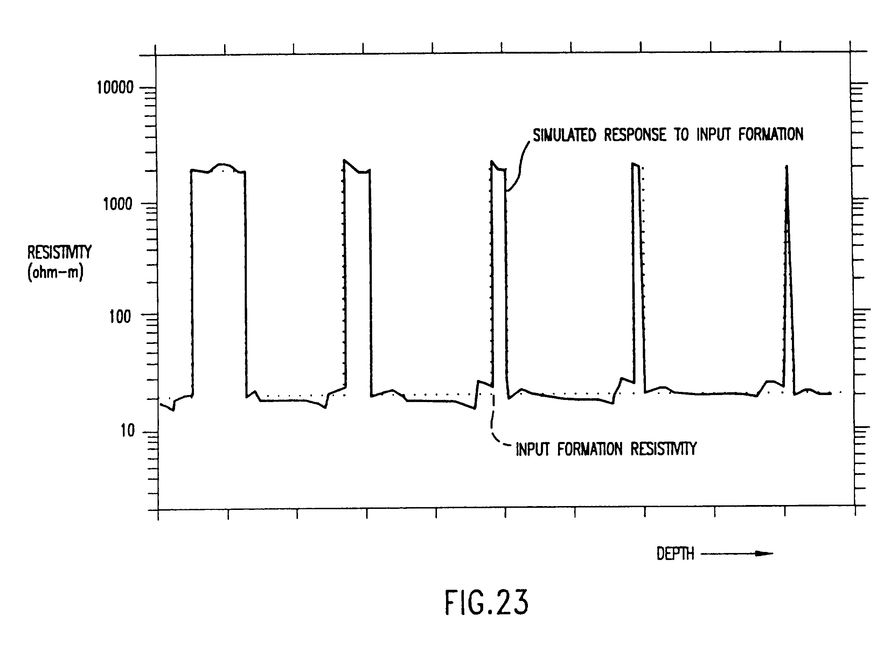

are shown in Figures 22 and 23. Figures 22 and 23 are for the tool arrangement previously described, with Fig. 22 having conductive beds and Fig. 23 having resistive beds. In both cases, as in previous logs, the contrast ratio is 100 to 1. The logs match well to the bed patterns, with only small artifacts.

There is another way to visualize the compensation represented by equation (2), in terms of both transmitters operating at adjustable levels. Transmitter T1 operates at a relative level of $M_{02}/M_{21}$. This is the ratio of the current from the lower transmitter measured at the central monitor divided by the current measured at the upper transmitter. Thus, it is sensitive to the leakage of current between the upper transmitter and the ring. Similarly, the lower transmitter operates at a relative level $M_{01}/M_{21}$ which is the ratio of currents from the upper transmitter measured at the central monitor divided by the current measured at the lower transmitter. This is sensitive to the leakage of current between the lower transmitter and the ring. Thus both transmitters are operated to compensate for leakage between that transmitter and the monitor.

The foregoing assumes that the ratio $M_{02}/M_{12}$ precisely compensates for the effect of "shielding" by a conductive bed between the upper transmitter and the ring electrode. The tacit assumption is that the conductive regions have the same effect on the leakage of current between the ring electrode and the upper transmitter from the lower transmitter as they do on the "shielding" of the ring from the upper transmitter. This is true to first order.

A general expression can be set forth in which one term contains a factor times $R_1$ and the second term contains a factor times $R_2$. These factors are measures of leakage and are functions of the ratios of monitor currents as follows:

$$R_c = F_1(\frac{M_{01}}{M_{12}}, \frac{M_{02}}{M_{12}}, \frac{M_{01}}{M_{02}})R_1 + F_2(\frac{M_{01}}{M_{12}}, \frac{M_{02}}{M_{12}}, \frac{M_{01}}{M_{02}})R_2, \tag{3}$$

where $F_1$ and $F_2$ are compensation functions, and the requirement of zero axial current can be relaxed. Further generalization can be achieved by adding additional transmitters and monitors and so making the functions $F_1$ and $F_2$ more general.

It can be noted that leakage can be practically eliminated by covering the region between the transmitters and the electrode with an insulating material. When combined with the described compensation technique, this can provide an excellent resistivity log. A drawback is the fragility of the insulating material in a logging-while-drilling application. Also, the resultant measurement has more response close to the tool, and a far larger borehole effect.

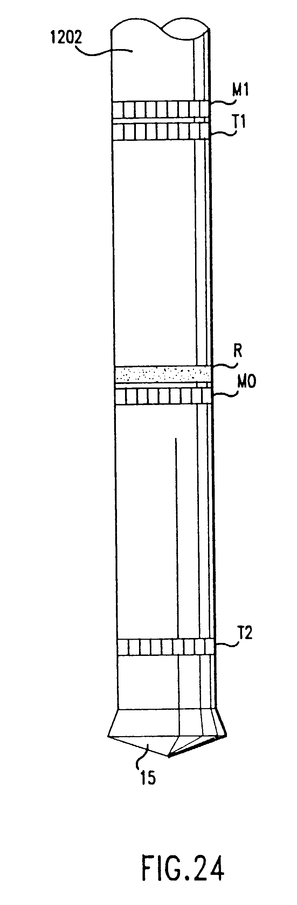

Fig. 24 illustrates an embodiment which is similar to that of Fig. 15, but wherein the toroidal monitor M2 at the lower transmitter position is replaced by the toroidal monitor M1 at the upper transmitter position. By reciprocity, $M_{12}$ (signal at M1 with transmitter T2 energized) can be measured and will provide substantially the same value as $M_{21}$, for use in equation (2). The principle of reciprocity would also permit the reversal of position of other transmitter/receiver combinations from which signals are obtained. For example, a further transmitter T0 could be provided adjacent the ring electrode to be used in conjunction with a monitor toroidal antenna at the bottom position, and the monitor signal obtained from this transmitter/receiver would be equivalent, by reciprocity, to the previously indicated $M_{01}$.

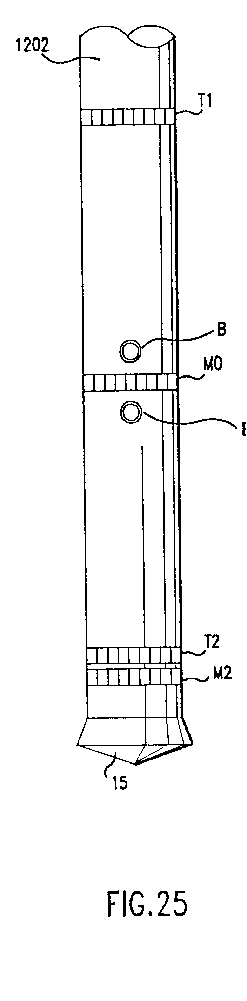

Fig. 25 illustrates an embodiment like that of Fig. 15, but with a button electrode B (which may be of the type previously described) replacing the ring electrode R. As described above, azimuthal resistivity information can be obtained from the button electrode. Typically one or more button electrodes and/or one or more ring electrodes may be employed, in conjunction with one or more monitor toroids such as M0. A second button electrode, B', is shown in Fig. 25. The described type of compensation can improve the vertical response of multiple electrodes (which provide different depths of investigation) and make their vertical responses more similar. Different depths of investigation can also be obtained by providing additional transmitters and monitors which are spaced different distances from the electrodes. These can be operated either sequentially or at different frequencies. The longer transmitter/electrode spacings will generate responses that are relatively deep, while the shorter transmitter/electrode spacings will provide relatively shallow responses.

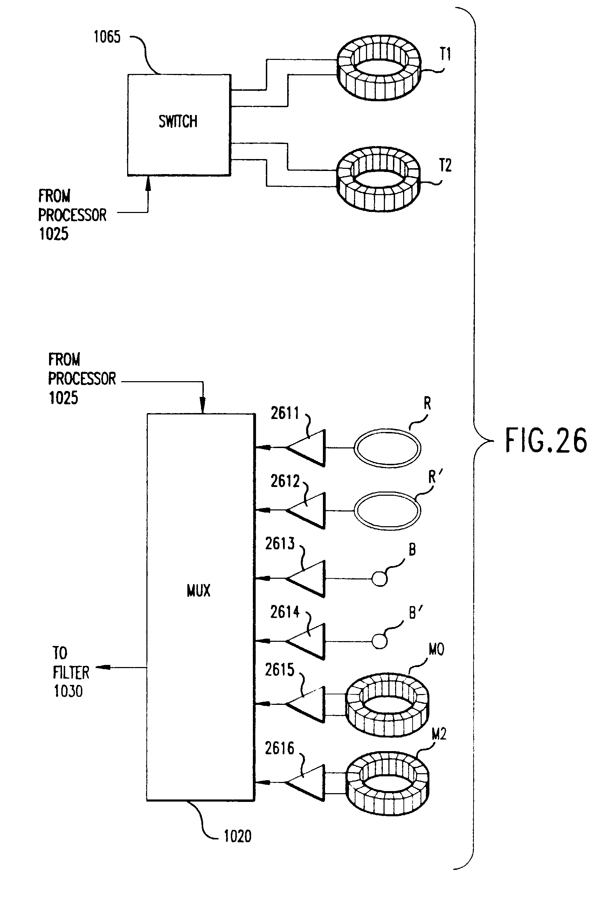

The electronics for the foregoing embodiments can be of the type set forth in the block diagram of Fig. 10 having the further features shown in the block diagram of Fig. 26. In particular, the switch 1065 (Fig. 10) is under control of the processor 1025 (Fig. 10) and couples an energizing signal to either transmitter T1 or T2. [If desired, these transmitters can be operated simultaneously out of phase, as previously described.] The multiplexer 1020 (Fig. 10), which is also under control of processor 1025, in this case receives inputs from the ring R via amplifier 2611, from one or more further rings represented at R' via amplifier 2612, from the button B via amplifier 2613, from one or more further buttons represented at B' via amplifier 2614, from receiver (monitor) toroid M0 via amplifier 2615, and from receiver (monitor) toroid M2 via amplifier 2616.

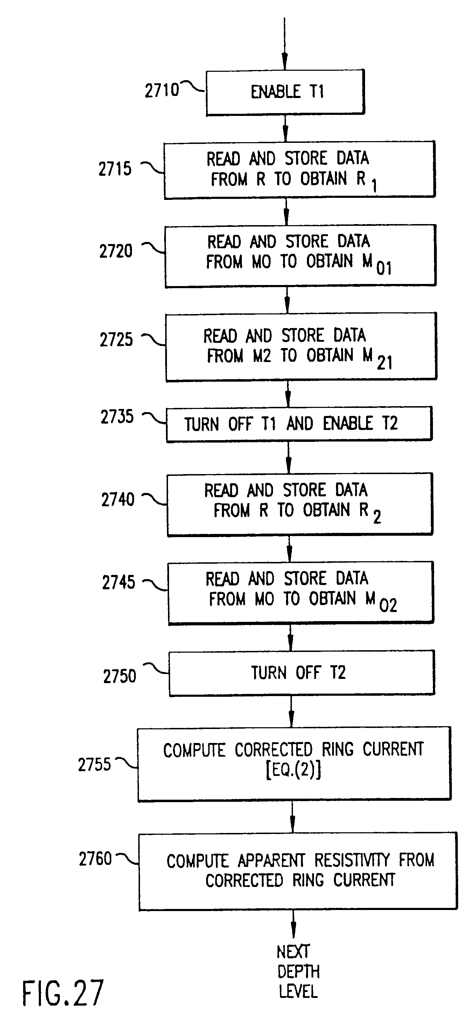

Fig. 27 is a flow diagram of a routine for programming a processor, such as the processor 1025 of Fig. 10 (as modified by Fig. 26) to implement operation of the embodiment of Fig. 15 in accordance with a form of the invention. The block 2710 represents the enabling of transmission from transmitter T1, this being implemented by control of switch 1065. The blocks 2715, 2720 and 2725 respectively represent the measurement and storage of signal data received at receivers R, M0 and M2, the functions being initiated by controlling the multiplexer 1020 in sequence to obtain these measurements. In particular, the block 2715 represents the reading and storage of data from the ring electrode R to obtain $R_1$, the block 2720 represents the reading and storage of data from monitor toroid M0 to obtain $M_{01}$, and the block 2725 represents the reading and storage of data from monitor toroid M2 to obtain $M_{21}$. The transmitter T1 is then turned off and the transmitter T2 is enabled, as represented by the block 2735. The blocks 2740 and 2745 respectively represent the measurement and storage of signal data received at receivers R and M0, these functions again being initiated by controlling the multiplexer 1020. In particular, the block 2740 represents the reading and storage of data from ring electrode R to obtain $R_2$, and the block 2745 represents the reading and storage of data from monitor toroid M0 to obtain $M_{02}$. The transmitter T2 is then turned off (block 2750) and the corrected ring current is computed (block 2755) from equation (2). The apparent resistivity can then be obtained from the ring current as previously described, in accordance with $R_{app} = kV/I$.

In the flow diagram of Fig. 27, currents are generated and measured by operating transmitters T1 and T2 alternately. A similar result can be achieved utilizing frequency multiplexing, where both transmitters are operated simultaneously, but at different frequencies. This generates a current in the tool which has components at two frequencies. The current at any of the sensors (monitor, ring, or button) which comes from either transmitter can be determined by separating the received signal by frequency, such as with bandpass filters.

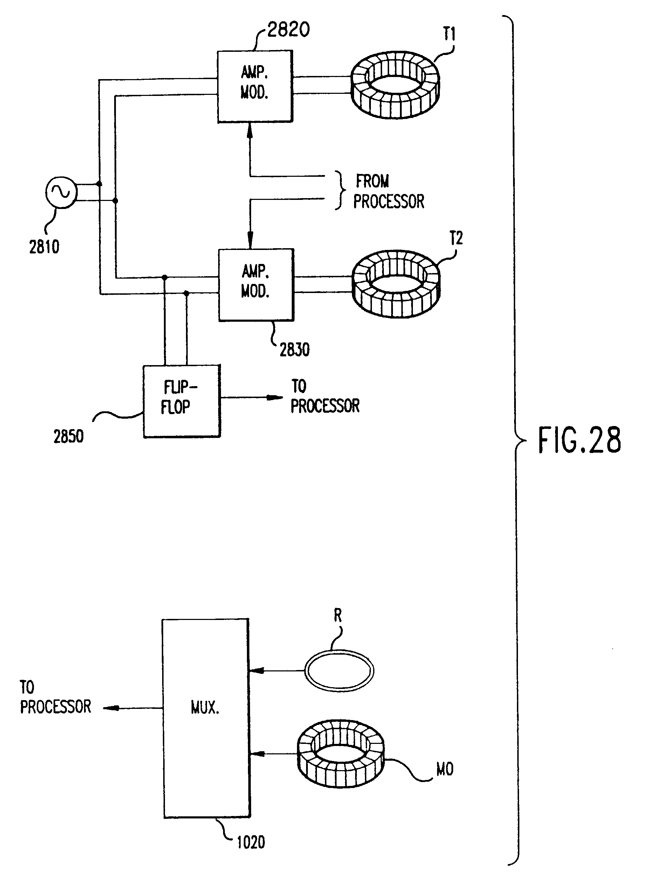

Fig. 28 illustrates a portion of the electronics that can be employed when the upper and lower transmitters are to be operated simultaneously and the monitor current is utilized to "balance" the resultant currents to contain a substantially zero axial current condition at the monitor toroid, such as the previously described monitor toroid M0. The AC source 2810 (which may, for example, be coupled to the transmitters through a switch, as in prior embodiments), is coupled to each of the transmitter toroidal antennas T1 and T2 via respective amplitude modulators 2820 and 2830. [Only one such amplitude modulator is strictly necessary, the general case being shown in this diagram.] The toroidal antennas are wired in phase opposition, so that they generate respective axial currents in the conductive body that travel in opposite directions. The amplitude modulators 2820 and 2830 are under control of processor 1025. The processor also receives a sample of the AC output via flip-flop 2850 which is switched to a different binary output state as the AC signal changes polarity, so that the processor knows the phase of the AC signal. In this case, the multiplexer 1020 is shown as receiving the output of the ring electrode R and the monitor toroidal antenna M0. In operation, when the current received at the monitor toroid M0 is above a predetermined threshold, amplitude control is sent to modulator 2820 and/or 2830 to reduce the current sensed by the monitor toroid in the manner of a conventional closed loop control. This embodiment is presently considered less preferred as it does not make use of the $M_{21}$ (or $M_{12}$) type of prefactor that is obtained by considering the effect of current from a transmitter independently.

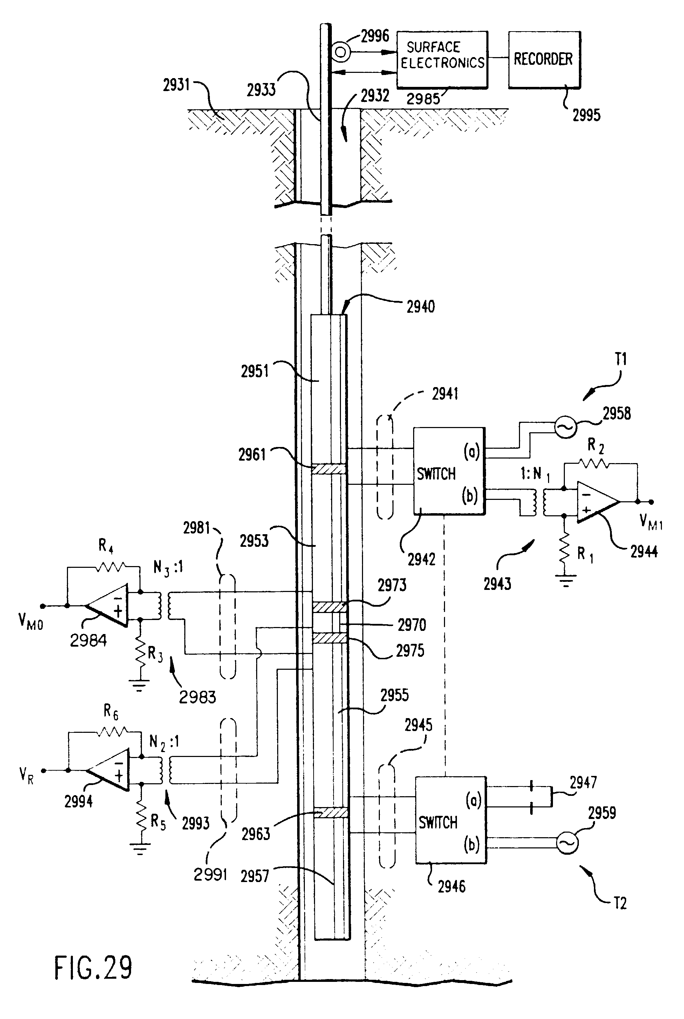

The principles of the this form of invention are also applicable to logging in an earth borehole with the drill string removed. Fig. 29 illustrates a logging device 2940 for investigating subsurface formations 2931 traversed by a borehole 2932. The logging device is suspended in the borehole 2932 on an armored cable 2933, the length of which substantially determines the relative depth of the device 2940. The cable length is controlled by suitable means at the surface such as a drum and winch mechanism (not shown). Electronic signals indicative of the information obtained by the logging device can be conventionally transmitted through the cable 2933 to electronics 2985 and recorder 2995 located at the surface of the earth. Alternatively, some or all processing can be performed downhole. Depth information can be provided from a rotating wheel 2996 that is coupled to the cable 2933.

The logging device 2940 includes elongated generally cylindrical sections 2951, 2953, 2955 and 2957 which may be formed, for example, of conductive metal pipe. Electrically insulating isolators, 2961 and 2963 are located at the intersection of sections 2951 and 2953 and the intersection of sections 2955 and 2957, respectively. The isolators 2961 and 2963 may comprise, for example, threaded annular fiberglass pipe couplers. Located between the sections 2953 and 2955 is an electrode 2970, which is illustrated in the present embodiment as being a ring electrode, but could also be one or more button and/or ring electrodes. In the embodiment of Fig. 29, the ring 2970 is a conductive metal ring that is mounted between two more isolators 2973 and 2975.

In the present embodiment, the electronics, shown adjacent the logging device for ease of illustration, are located in the central hollow portion of one or more of the pipe sections of the device, although it will be understood that the electronics could alternatively be located in an adjacent module coupled above or below the device 2940, such as by a further coupler that may be conductive or non-conductive, with wiring that passes through the hollow sections and the annular couplers, as necessary. Power and computer processor control can be provided, for example, from the uphole electronics via cable 2933, it being understood that some of these functions, including communications capability, can be provided downhole, as is well known in the art. In the embodiment of Fig. 29, AC energizing sources for transmitters T1 and T2 are shown at 2958 and 2959, respectively. [Although separate energizing sources are illustrated, it will be understood that a common transmitter energizing source could alternatively be utilized.] The AC frequency may be, for example, in the range 100 Hz to 1 MHz. Conductor pair 2941 is coupled across pipe sections 2951 and 2953 and to one side of a switch 2942, the other side of which is coupled to either the transmitter T1 [switch position (a)] or to a low impedance winding of a current sense transformer 2943 [switch position (b)] which, in the illustrated embodiment, has a turns ratio $1:N_1$. The transformer secondary is coupled across the inverting and non-inverting inputs of an operational amplifier 2944, the non-inverting input of which is coupled to ground reference potential by resistor $R_1$. A feedback resistor $R_2$ is coupled between the output of operational amplifier 2944 and the inverting input thereof. The output of operational amplifier 2944 is designated $V_{M1}$.

A conductor pair 2945 is coupled across the pipe sections 2955 and 2957, and to one end of a switch 2946, the other end of which is coupled to either the transmitter T2 [switch position (b)] or to the short circuit 2947 [switch position (a)]. The switches 2942 and 2946 are under common control.

A further conductor pair 2981 couples pipe sections 2953 and 2955 via a low impedance winding of current sense transformer 2983 having an indicated turns ratio of $N_3$:1. The secondary winding of transformer 2983 is coupled across the inverting and non-inverting inputs of an operational amplifier 2984, the non-inverting input of which is coupled to ground reference potential by resistor $R_3$. A feedback resistor $R_4$ is coupled between the output of operational amplifier 2984 and the inverting input thereof. The output of operational amplifier 2984 is designated $V_{M0}$.

A further conductor pair 2991 couples the ring electrode 2970 to the pipe section 2955 (which is, in turn, effectively shorted to pipe section 2953 by the low impedance winding of transformer 2983) via a low impedance winding of current sense transformer 2993 having an indicated turns ratio of $N_2$:1. The secondary winding of transformer 2993 is coupled across the inverting and non-inverting inputs of an operational amplifier 2994, the non-inverting input of which is coupled to ground reference potential by resistor $R_5$. A feedback resistor $R_6$ is coupled between the output of operational amplifier 2994 and the inverting input thereof. The output of operational amplifier 2994 is designated $V_R$.

Operation is similar to the previously described case for sequential energizing of the transmitters T1 and T2, and the obtainment of measurement signals at the ring electrode and the monitor positions. [In this case, the second monitor is at the same position as the upper transmitter, as in the analogous arrangement of M1 in Fig. 24.] The electronics control can be similar to that described in conjunction with Figures 10, 11, 26 and 27. In particular, with the switches 2942 and 2946 at position "a", the transmitter T1 is operative and pipe sections 2955 and 2957 are shorted. Measurements are taken to obtain the voltages $V_{R1}$ and $V_{M01}$. The ring current $I_R$ is obtained from

$$V_R = (R_5 + R_6)I_R/N_2, \tag{4}$$

that is:

$$I_R = V_R N_2/(R_5 + R_6). \tag{5}$$

Similarly, the monitor current $M_0$ is obtained from

$$V_{M0} = (R_3 + R_4)M_0/N_3, \tag{6}$$

that is:

$$M_0 = V_{M0} N_3/(R_3 + R_4). \tag{7}$$

Using the same convention as above, $V_{R1}$ and $V_{M01}$ are the voltages obtained with transmitter T1 enabled. Next, the switches 2942 and 2946 are put in position (b), the transmitter T2 is enabled, and the pipe sections 2951 and 2953 are effectively shorted. Measurements are taken to obtain the voltages $V_{M02}$ (from which the current $M_{02}$ is obtained in accordance with equation (7) above) and $V_{M12}$. The monitor current $M_1$ is obtained from

$$V_{M1} = (R_1 + R_2)M_1/N_1, \tag{8}$$

that is:

$$M_1 = V_{M1} N_1/(R_1 + R_2). \tag{9}$$

Again, using the same convention as above, $V_{M02}$ and $V_{M12}$ are the voltages obtained with transmitter T2 enabled. The compensated ring current, $I_{RC}$, is

$$I_{RC} = (M_{02}/M_{12})I_{R1} + (M_{01}/M_{12})I_{R2}. \tag{10}$$

Apparent resistivity in the region surrounding the ring electrode is inversely proportional to the corrected ring current.

The embodiment illustrated in Fig. 29 uses isolators in establishing electrical potential differences between conductive sections of the body of the logging device, and to electrically isolate the electrode 2970. Also, currents are measured with direct current flow occurring through a low impedance winding of a current sense transformer. It will be understood that, for example, the voltage gaps at isolators 2961 and/or 2963, and their associated sources could alternatively be toroidal transmitters and their associated sources as in previous embodiments, and that currents can be measured using toroidal receivers. Also, the electrode may be, for example, a button or ring electrode of the type previously described. Similarly, it will be understood that the techniques illustrated in Fig. 29 could be employed, in whole or in part, in a measurement-while-drilling embodiment, but are presently considered less preferred for such application from at least the standpoint of construction ruggedness.

It will be understood that while separate toroidal antennas are shown for transmitting and receiving from substantially the same position (there being certain practical advantages to having different antennas for use as transmitter and receiver), a single toroidal antenna can be shared for this purpose using suitable switching.

Fig. 30 illustrates an embodiment of the surface/local communication subassembly 150 of the Fig. 1 embodiment. As previously described, this subassembly can include a conventional type of mud communications equipment, including a mud transmitter (or mud siren), a mud receiver, and associated circuitry. This equipment, which is not, of itself, a novel feature of the present invention, is represented in Fig. 30 as being contained in a section of drill collar represented at 1210. Connected thereto, and housed in a section of drill collar 1220, is the local communications portion of the subassembly 150. In general, the collar 1220 is constructed in a manner similar to a portion of the measurement and local communications subassembly 200 as previously described, but the collar 1220 can be much shorter since only a single toroidal coil antenna, and no receiving electrodes, are utilized in the present embodiment. In particular, the collar 1220 has an inner annular chassis 1225 through which the drilling mud passes, and which has slots for circuit boards and batteries (not shown). The toroidal coil antenna 1250 can be constructed and mounted, in an insulating medium, in the manner previously described in conjunction with Fig.s 2 and 3, the coil again communicating with the electronics via a bulkhead connector (not shown).

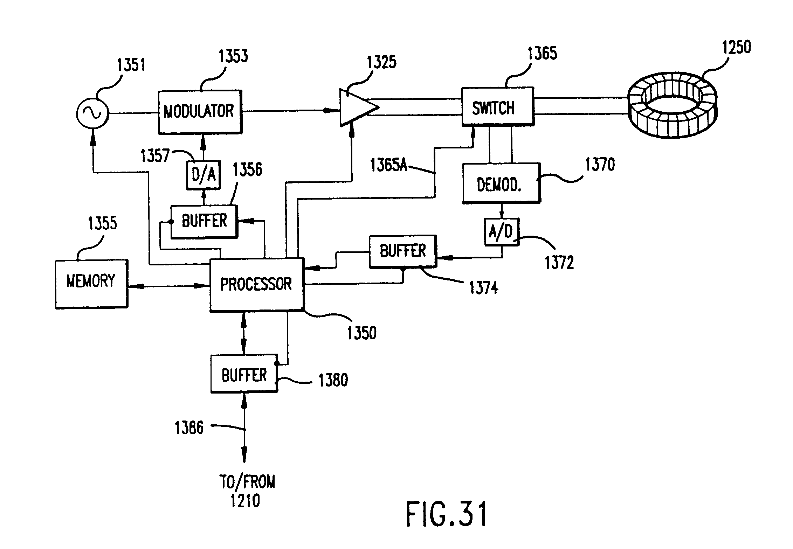

Fig. 31 illustrates an embodiment of the electronics in the local communications portion of surface/local communications subassembly 150. The electronics can be similar to the portion of the electronics utilized for local communication in the previously described measurement and local communications subassembly 200. In particular, the toroidal coil antenna 1250 is coupled, via electronic switch 1365, to a demodulator 1370 and to the output of a power amplifier 1325. The switch 1365 is under control (line 1365A) of a suitably equipped processor 1350, which includes memory 1355 and typical clock, timing, and input/output capabilities (not separately represented). A sinewave generator 1351 and a modulator 1353 are provided, as are a digital-to-analog converter 1357 and buffer 1356, these units operating in a manner similar to their counterparts in Fig. 10. Also, as in the Fig. 10 embodiment, the output of demodulator 1370 is coupled, via analog-to-digital converter 1372 and buffer 1374, to the processor 1350. In the present embodiment, the processor 1350 is also coupled with the mud communications equipment (1210) via buffer 1380 and wiring 1386 that is coupled between the equipments 1210 and 1220. It will be understood that the equipments 1210 and 1220 (which comprise the subassembly 150) can be formed as a single unit within a single drill collar or housing, or can be separately formed, with provision for electrical coupling of the wiring at the interface. If desired, the circuitry for the two parts of the subassembly 150 can be shared; for example, a single processor or processor system could be utilized for the entire subassembly 150.

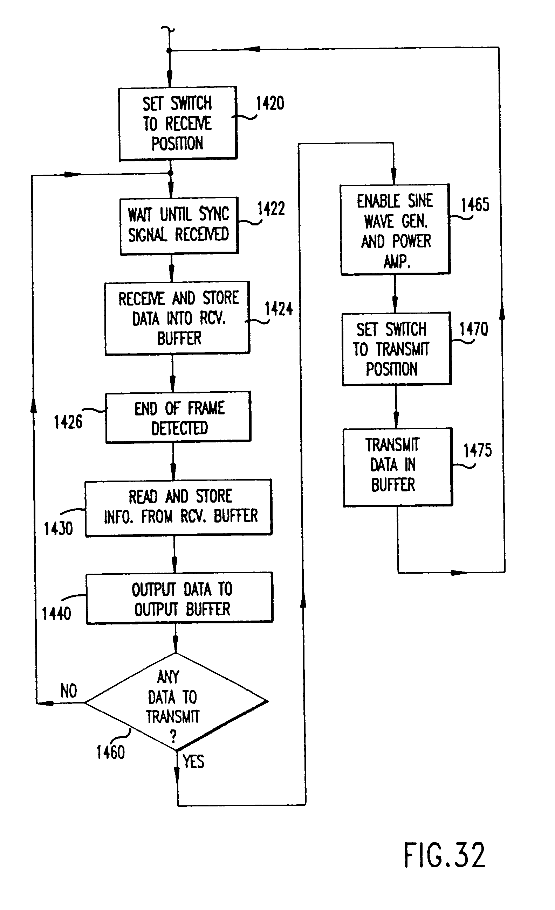

Referring to Fig. 32, there is shown a flow diagram of an embodiment of a routine for programming the processor 1350 in accordance with a form of the invention. The block 1420 represents the setting of the electronic switch 1365 to its "receive" position. The block 1422 represents a processor state defined by waiting until a synchronization signal is recognized, at which point, the processor knows that information will follow. The data is then received and stored into a buffer (block 1424) continuously until an "end of frame" signal is recognized (block 1426). This signal indicates that the subassembly 200 is prepared to receive data and/or commands, if any. Block 1430 represents the reading and storage of data via the receiver buffer 1374. The data is then loaded into the output buffer 1380 (block 1440) which is coupled to the processor in the mud communications equipment of unit 1210. The mud telemetry may transmit fresh data or the previous data if no new data has arrived since the last mud telemetry frame was sent.

Inquiry is then made (block 1460) as to whether there is any information to transmit to the measurement and local communications subassembly 200. If not, block 1422 is re-entered. If data is to be transmitted, the sinewave generator is enabled (block 1465), the switch 1365 is set to its transmit position (block 1470), and the transmission of data is implemented (block 1475). When data transmission is complete, the switch 1365 is set back to the receive position (block 1420) and block 1422 is entered to wait for the next synchronization signal. As noted above with regard to the flow diagram of Fig. 11, various alternative techniques for implementing and controlling the processor can be employed.

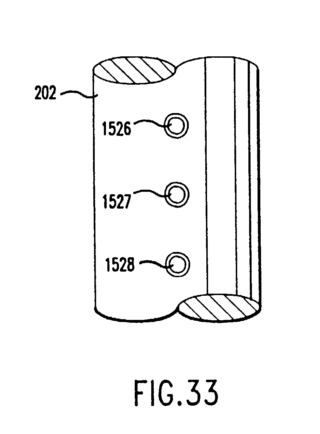

Fig. 33 illustrates an embodiment wherein electrodes such as button electrodes 1526, 1527 and 1528 are mounted in the drill collar 202 instead of in a stabilizer or an undersized stabilizer. In other respects, the structure of the electrodes, the toroidal coil antennas, and their associated circuitry, can be as described above. This embodiment can be useful under conditions where use of a slick collar is indicated or beneficial.

The azimuthal resistivity obtained using the electrodes hereof can be correlated with the rotational orientation of the drill collar housing (or with respect to other reference) in various ways. For example, assume that the subassembly 130 (Fig. 1) of the bottom hole assembly includes conventional direction and inclination ("D and I") measuring equipment that provides the direction and inclination of the borehole and provides the rotational azimuth of the subassembly 130 with respect to magnetic north (known as "magnetic toolface") and with respect to the high side of the borehole (known as "gravitational toolface"). This equipment produces signals that can be coupled with the processor 1025, stored locally, and or communicated uphole for ultimate correlation, such as by using clock synchronization, of all acquired signals. If desired, azimuthal orientation can be obtained during rotation.

The invention has been described with reference to particular preferred embodiments, but variations within the scope of the invention will occur to those skilled in the art. For example, it will be understood that functions which are illustrated as being implemented using a processor control can alternatively be implemented using hard-wired analog and/or digital processing.

## Claims

1. Apparatus for determining the resistivity of formations surrounding an earth borehole, comprising:

   an electrically conductive metal body (202) movable through the borehole;
   a toroidal coil antenna (205) disposed on said body; and
   means (1051, 1053, 1060) for energizing said toroidal antenna to induce a current which travels in a path that includes said body and said formations;

   said apparatus being characterized by:

   an electrode (226, 235) disposed on said body; and
   means (253, 256) for measuring at said electrode an electrical signal resulting from said current, said electrical signal being an indication of the resistivity of said formations.

2. Apparatus as defined by claim 1, wherein said means (253, 256; or 275, 256) for measuring an electrical signal comprises means for measuring the current flow in said electrode (226 or 235).

3. Apparatus as defined by claim 2, wherein said electrode (226 or 235) is coupled to said body (202).

4. Apparatus as defined by claim 3, wherein said means (253, 256; or 275, 256) for measuring current flow in said electrode (226 or 235) comprises means for measuring the magnitude of current flowing from said electrode to said body (202).

5. Apparatus as defined by claim 3 or claim 4, wherein the surface of said electrode (226 or 235) is electrically isolated from the surface of said body (202).

6. Apparatus as defined by any preceding claim, wherein said electrode comprises a button electrode (226) facing a wall of said borehole.

7. Apparatus as defined by any one of claims 1 to 5, wherein said electrode comprises a ring-shaped conductor (235) encircling the axis of said body (202).

8. Apparatus as defined by claim 6, wherein said button electrode (226) is directly mounted as a stud in said body (202), and wherein said means (253, 256) for measuring the magnitude of current flow in said electrode comprises a coil (253) encircling said stud and means (256) for measuring the current induced in said coil.

9. Apparatus as defined by any one of claims 1 to 7, wherein said electrode (226 or 235) is coupled to said body (202) via the primary winding of a transformer (275), and wherein said means for measuring current flow in said electrode includes means (256 or 2561) for measuring current induced in the secondary winding of said transformer.

10. Apparatus as defined by any preceding claim, further comprising at least one further electrode (227 or 228) disposed on said body at a different spacing from said toroidal coil antenna (205) than said first-mentioned electrode, and means for determining current flow in said at least one further electrode (226), to obtain a further indication of the resistivity of said formations.

11. Apparatus as defined by any preceding claim, wherein said electrode (226) is mounted on a blade (220) that is mechanically coupled to said body (202).

12. Apparatus as defined by any preceding claim, for use in a measurement-while-drilling system, wherein said body comprises a drill collar (202) in a drill string (12), said drill collar comprising an elongated tubular body (202), and wherein said toroidal antenna (205) is mounted on said body in an insulating medium (206), said antenna comprising a coil mounted on a toroidal core having an axis substantially coincident with the drill collar axis.

13. Apparatus as defined by claim 12, further comprising means for communicating said resistivity indication to the earth's surface.

14. Apparatus for determining the resistivity of formations surrounding an earth borehole, comprising:

an elongated electrically conductive body (1202) that is movable through the borehole;
first transmitter means (T1) for establishing a first current in the body from a first transmitter position on the body, said first current travelling in a path that includes the body and the formations; and
second transmitter means (T2) for establishing a second current in the body from a second transmitter position on the body that is spaced from the first transmitter position, said second current travelling in a path that includes the body and the formations;

said apparatus being characterized by:

an electrode (R or B) on said body having a surface that is electrically isolated from the surface of the body;
means (2611 or 2613) for measuring at said electrode a first electrical signal resulting from said first current and a second electrical signal resulting from said second current;
current monitor means (MO) for measuring the axial current passing a monitor position on the body to obtain a monitor current value; and
means (1025) for deriving an indication of formation resistivity as a function of said first electrical signal, said second electrical signal, and said monitor current value.

15. Apparatus as defined by claim 14, wherein said current monitor means (MO) comprises means (2615) for obtaining a first monitor current value when said first transmitter means (T1) is operative and a second monitor current value when said second transmitter means is operative, said deriving means (1025) being operative to derive said indication of formation resistivity as a function of said first electrical signal, said second electrical signal, said first monitor current value, and said second monitor current value.

16. Apparatus as defined by claim 14 or claim 15, further comprising further current monitor means (M1 or M2) at a further monitor position on said body (1202) for measuring the axial current passing the further monitor position (1202) to obtain a further monitor current value, said deriving means (1025) being operative to derive said indication of formation resistivity as a function of said further monitor current value.

17. Apparatus as defined by any one of claims 14 to 16, wherein said first and second transmitter positions are spaced apart on said body (1202), said electrode (R or B) is located between said first and second transmitter positions, and said monitor position is located between said first and second transmitter positions.

18. Apparatus as defined by claim 17, wherein said monitor position is adjacent said electrode (R or B).

19. Apparatus as defined by either of claims 17 or 18 when dependent from claim 16, wherein said further monitor position is adjacent one of said transmitter positions, and said further monitor means (M1 or M2) obtains said further monitor current value when the transmitter means (T2 or T1 ) at the other of said transmitter positions is operative.

20. Apparatus as defined by claim 19, wherein said first electrical signal is designated $R_1$, said second electrical signal is designated $R_2$, said first monitor current value is designated $M_{01}$, said second monitor current value is designated $M_{02}$, and said further monitor current value is designated $M_{12}$, and wherein said deriving means (1025) derives said formation resistivity as being inversely proportional to

$$\frac{1}{M_{12}}(M_{02}R_1 + M_{01}R_2).$$

21. Apparatus as defined by any of claims 14 to 20, wherein said first and second transmitter means (T1 and T2) and said current monitor means (MO) each comprise a toroidal antenna.

22. Apparatus as defined by any of claims 14 to 21, wherein said electrode comprises a ring electrode (R).

23. Apparatus as defined by any of claims 14 to 21, wherein said electrode comprises a button electrode (B).

24. Apparatus as defined by any of claims 14 to 23, wherein said conductive body is a metal drill collar (1202) in a drill string.

25. Apparatus as defined by any of claims 14 to 23, wherein said conductive body comprises coupled pipe sections.

**26.** Apparatus as defined by claim 25, wherein said body is suspended in said borehole on a wireline.

**27.** A method for determining the resistivity of formations surrounding a borehole, comprising the steps of:

providing an elongate electrically conductive body that is movable through the borehole; and
establishing a current in said body that travels in a path that includes the body and the formations;

said method being characterized by:

measuring an electrical signal resulting from said current at an electrode on the body that has a surface which is electrically isolated from the surface of the body, to obtain a measured electrode signal;
deriving a compensation signal from a measurement of axial current in the body; and
producing a compensated electrode signal as a function of said measured electrode signal and said compensation signal, the compensated electrode signal being indicative of formation resistivity.

**28.** The method as defined by claim 27, further comprising the step of deriving formation resistivity from said compensated electrode signal.

**29.** The method as defined by claim 27 or 28, wherein said step of establishing a current comprises establishing first and second currents from spaced-apart transmitter positions on said body.

**30.** A method for determining the resistivity of formations surrounding a borehole, comprising the steps of:

providing an elongate electrically conductive body that is movable through the borehole;
providing a first source to establish a first current in the body that travels in a path that includes the body and the formations; and
providing a second source to establish a second current in the body that travels in a path that includes the body and the formations such that said second and first currents travel in opposite directions in the body;

said method being characterized by:

measuring axial current in the body, and controlling at least one of said sources as a function of the measured axial current; and
measuring an electrical signal at an electrode on the body that has a surface which is electrically isolated from the surface of the body, said signal being indicative of formation resistivity.

**31.** The method as defined by claim 30, wherein said axial current is measured at a position on said body that is adjacent said electrode.

**Patentansprüche**

**1.** Vorrichtung für das Bestimmen des spezifischen Widerstandes von ein Erdbohrloch umgebenden Formationen, umfassend:

einen durch das Bohrloch beweglichen, elektrisch leitenden Metallkorpus (202);
eine auf dem Korpus angeordnete Toroidspulenantenne (205); und
Mittel (1051, 1053, 1060) für das Erregen der Toroidantenne zum Induzieren eines Stromes, der einen Pfad durchläuft, welcher den Korpus und die Formationen einschließt;

welche Vorrichtung gekennzeichnet ist durch:

eine an dem Korpus angeordnete Elektrode (226, 235); und
Mittel (253, 256) für das Messen eines elektrischen, von dem Strom herrührenden Signals an der Elektrode, welches elektrische Signal eine Indikation des spezifischen Widerstandes der Formationen ist.

**2.** Vorrichtung nach Anspruch 1, bei der die Mittel (253, 256; oder 275, 256) für das Messen eines elektrischen Signals Mittel für das Messen des Stromflusses in der Elektrode (226 oder 235) umfassen.

3. Vorrichtung nach Anspruch 2, bei der die Elektrode (226 oder 235) mit dem Korpus (202) gekoppelt ist.

4. Vorrichtung nach Anspruch 3, bei der die Mittel (253, 256; oder 275, 256) für das Messen des Stromflusses in der Elektrode (226 oder 235) Mittel für das Messen der Amplitude des von der Elektrode zu dem Korpus (202) fließenden Stromes umfassen.

5. Vorrichtung nach Anspruch 3 oder Anspruch 4, bei der die Oberfläche der Elektrode (226 oder 235) elektrisch von der Oberfläche des Korpus (202) isoliert ist.

6. Vorrichtung nach einem der vorangehenden Ansprüche, bei der die Elektrode eine Knopfelektrode (226), die einer Bohrlochwandung zugekehrt ist, umfaßt.

7. Vorrichtung nach einem der Ansprüche 1 bis 5, bei der die Elektrode einen ringförmigen Leiter (235) umfaßt, der die Achse des Korpus (202) umschließt.

8. Vorrichtung nach Anspruch 6, bei der die Knopfelektrode (226) direkt als ein Stehbolzen in dem Korpus (202) montiert ist, und bei der die Mittel (253, 256) für das Messen der Amplitude des Stromflusses in der Elektrode eine Spule (253) umfassen, welche den Stehbolzen umschließt, sowie Mittel (256) für das Messen des in der Spule induzierten Stromes.

9. Vorrichtung nach einem der Ansprüche 1 bis 7, bei der die Elektrode (226 oder 235) mit dem Korpus (202) über die Primärwicklung eines Transformators (275) gekoppelt ist, und bei der die Mittel für das Messen des Stromflusses in der Elektrode Mittel (256 oder 2561) umfassen für das Messen des Stromes, induziert in der Sekundärwicklung des Transformators.

10. Vorrichtung nach einem der vorangehenden Ansprüche, ferner umfassend mindestens eine weitere Elektrode (227 oder 228), die an dem Korpus in einem anderen Abstand von der Toroidspulenantenne (205) angeordnet ist als die ersterwähnte Elektrode, sowie Mittel für das Bestimmen des Stromflusses in der mindestens einen weiteren Elektrode (226) zum Erhalten einer weiteren Indikation bezüglich des spezifischen Widerstandes der Formationen.

11. Vorrichtung nach einem der vorangehenden Ansprüche, bei der die Elektrode (226) auf einem mechanisch mit dem Korpus (202) gekoppelten Blatt (220) montiert ist.

12. Vorrichtung nach einem der vorangehenden Ansprüche zur Verwendung in einem System, bei dem während des Abteufens gemessen wird, wobei der Korpus einen Bohrkragen (202) in einem Bohrstrang (12) umfaßt, welcher Bohrkragen einen langgestreckten rohrförmigen Korpus (202) umfaßt, und wobei die Toroidantenne (205) auf dem Korpus in einem isolierenden Medium (206) montiert ist, welche Antenne eine Spule umfaßt, die auf einem toroidalen Kern mit einer Achse, die im wesentlichen mit der Bohrkragenachse zusammenfällt, montiert ist.

13. Vorrichtung nach Anspruch 12, ferner umfassend Mittel für die Kommunikation der Indikation des spezifischen Widerstandes nach über Tage.

14. Vorrichtung für das Bestimmen des spezifischen Widerstandes von ein Erdbohrloch umgebenden Formationen, umfassend:

einen langgestreckten, elektrisch leitenden Korpus (1202), der durch das Bohrloch beweglich ist;
erste Sendermittel (T1) für das Etablieren eines ersten Stromes in dem Korpus von einer ersten Senderposition auf dem Korpus, welcher erste Strom in einem Pfad fließt, der den Korpus und die Formationen einschließt; und zweite Sendermittel (T2) für das Etablieren eines zweiten Stromes in dem Korpus von einer zweiten Senderposition auf dem Korpus, der von der ersten Senderposition im Abstand liegt, welcher zweite Strom in einem Pfad fließt, der den Korpus und die Formationen einschließt;

welche Vorrichtung gekennzeichnet ist durch:

eine Elektrode (R oder B) auf dem Korpus mit einer Oberfläche, die von der Oberfläche des Korpus elektrisch isoliert ist;
Mittel (2611 oder 2613) für das Messen an der Elektrode eines ersten elektrischen Signals, herrührend von dem ersten Strom, und eines zweiten elektrischen Signals, herrührend von dem zweiten Strom;

Stromüberwachungsmittel (M0) für das Messen des Axialstromes, der eine Überwachungsposition auf dem Korpus durchfließt zum Gewinnen eines Überwachungsstromwertes; und

Mittel (1025) für das Ableiten einer Indikation des spezifischen Formationswiderstandes als eine Funktion des ersten elektrischen Signals, des zweiten elektrischen Signals und des Überwachungsstromwertes.

15. Vorrichtung nach Anspruch 14, bei der das Stromüberwachungsmittel (M0) Mittel (2615) für das Gewinnen eines ersten Überwachungsstromwertes umfassen, wenn das erste Sendermittel (T1) in Betrieb ist, und eines zweiten Überwachungsstromwertes, wenn das zweite Sendermittel in Betrieb ist, wobei die Ableitungsmittel (1025) in Betrieb sind zum Ableiten der Indikation des spezifischen Formationswiderstandes als eine Funktion des ersten elektrischen Signals, des zweiten elektrischen Signals, des ersten Überwachungsstromwertes und des zweiten Überwachungsstromwertes.

16. Vorrichtung nach Anspruch 14 oder Anspruch 15, ferner umfassend weitere Stromüberwachungsmittel (M1 oder M2) an einer weiteren Monitorposition auf dem Korpus (1202) für das Messen des Axialstromes, der die weitere Überwachungsposition (1202) durchfließt zum Gewinnen eines weiteren Überwachungsstromwertes, wobei die Ableitungsmittel (1025) ausgebildet sind zum Ableiten der Indikation des spezifischen Formationswiderstandes als eine Funktion des weiteren Überwachungsstromwertes.

17. Vorrichtung nach einem der Ansprüche 14 bis 16, bei der die erste und die zweite Senderposition auf dem Korpus (1202) im Abstand voneinander sind, die Elektrode (R oder B) sich zwischen der ersten und der zweiten Senderposition befindet, und die Monitorposition zwischen der ersten und der zweiten Senderposition positioniert ist.

18. Vorrichtung nach Anspruch 17, bei der die Überwachungsposition nahe der Elektrode (R oder B) ist.

19. Vorrichtung nach Anspruch 17 oder 18, soweit von Anspruch 16 abhängig, bei der die weitere Überwachungsposition nahe einer der Senderpositionen ist, und das weitere Überwachungsmittel (M1 oder M2) den weiteren Überwachungsstromwert liefert, wenn das Sendermittel (T2 oder T1) an der anderen der Senderpositionen in Betrieb ist.

20. Vorrichtung nach Anspruch 19, bei der das erste elektrische Signal mit $R_1$ bezeichnet ist, das zweite elektrische Signal mit $R_2$ bezeichnet ist, der erste Überwachungsstromwert mit $M_{01}$ bezeichnet ist, der zweite Überwachungsstromwert mit $M_{02}$ bezeichnet ist, und der weitere Überwachungsstromwert mit $M_{12}$ bezeichnet ist, und bei der das Ableitungsmittel (1025) den spezifischen Formationswiderstand als umgekehrt proportional zu

$$\frac{1}{M_{12}}(M_{02}R_1 + M_{01}R_2).$$

ableitet.

21. Vorrichtung nach einem der Ansprüche 14 bis 20, bei der das erste und das zweite Sendermittel (T1 und T2) und das Stromüberwachungsmittel (M0) jeweils eine Toroidantenne umfassen.

22. Vorrichtung nach einem der Ansprüche 14 bis 21, bei der die Elektrode eine Ringelektrode (R) umfaßt.

23. Vorrichtung nach einem der Ansprüche 14 bis 21, bei der die Elektrode eine Knopfelektrode (B) umfaßt.

24. Vorrichtung nach einem der Ansprüche 14 bis 23, bei der der leitende Korpus ein metallischer Bohrkragen (1202) in einem Bohrstrang ist.

25. Vorrichtung nach einem der Ansprüche 14 bis 23, bei der der leitende Korpus gekoppelte Rohrabschnitte umfaßt.

26. Vorrichtung nach Anspruch 25, bei der der Korpus an einem Kabel in dem Bohrloch hängt.

27. Ein Verfahren zum Bestimmen des spezifischen Widerstandes von ein Bohrloch umgebenden Formationen, umfassend die Schritte:

Bereitstellen eines langgestreckten, elektrisch leitenden Korpus, der durch das Bohrloch beweglich ist; und Etablieren eines Stromes in dem Korpus, der in einem Pfad fließt, der den Korpus und die Formationen einschließt;

welches Verfahren gekennzeichnet ist durch:

Messen eines elektrischen Signals, herrührend von dem Strom an einer Elektrode auf dem Korpus mit einer Oberfläche, die elektrisch von der Oberfläche des Korpus isoliert ist, zum Erhalten eines gemessenen Elektrodensignals;
Ableiten eines Kompensationssignals aus einer Messung von Axialstrom in dem Korpus; und
Erzeugen eines kompensierten Elektrodensignals als eine Funktion des gemessenen Elektrodensignals und des Kompensationssignals, wobei das kompensierte Elektrodensignal indikativ für den spezifischen Formationswiderstand ist.

28. Das Verfahren nach Anspruch 27, ferner umfassend den Schritt der Ableitung des spezifischen Formationswiderstandes aus dem kompensierten Elektrodensignal.

29. Das Verfahren nach Anspruch 27 oder 28, bei dem der Schritt des Etablierens eines Stromes, das Etablieren eines ersten und eines zweiten Stromes von im Abstand angeordneten Senderpositionen auf dem Korpus umfaßt.

30. Ein Verfahren für das Bestimmen des spezifischen Widerstandes von Formationen, die ein Bohrloch umgeben, umfassend die Schritte:

Bereitstellen eines langgestreckten, elektrisch leitenden Korpus, der durch das Bohrloch beweglich ist;
Bereitstellen einer ersten Quelle zum Etablieren eines ersten Stromes in dem Korpus, der in einem Pfad fließt, welcher den Korpus und die Formationen einschließt; und
Bereitstellen einer zweiten Quelle zum Etablieren eines zweiten Stromes in dem Korpus, der in einem Pfad fließt, der den Korpus und die Formationen einschließt derart, daß der zweite und der erste Strom in entgegengesetzten Richtungen in dem Korpus fließen;

welches Verfahren gekennzeichnet ist durch:

Messen des Axialstroms in dem Korpus und Steuern mindestens einer der Quellen als eine Funktion des gemessenen Axialstroms; und
Messen eines elektrischen Signals an einer Elektrode auf dem Korpus, welche eine elektrisch von der Oberfläche des Korpus isolierte Oberfläche aufweist, wobei das Signal indikativ ist für den spezifischen Formationswiderstand.

31. Das Verfahren nach Anspruch 30, bei dem der Axialstrom an einer Position auf dem Korpus gemessen wird, die nahe der Elektrode ist.

**Revendications**

1. Appareil pour déterminer la résistivité de formations entourant un trou de sondage terrestre, comprenant :

un corps métallique électriquement conducteur (202) mobile dans le trou de sondage ;
une antenne à inductance toroïdale (205) disposée sur ledit corps ; et
des moyens (1051, 1053, 1060) pour exciter ladite antenne toroïdale pour induire un courant qui parcourt un chemin qui comprend ledit corps et lesdites formations ;

ledit appareil étant caractérisé par :

une électrode (226, 235) disposée sur ledit corps ; et
des moyens (253, 256) pour mesurer, au niveau de ladite électrode, un signal électrique résultant dudit courant, ledit signal électrique étant une indication de la résistivité desdites formations.

2. Appareil selon la revendication 1, dans lequel lesdits moyens (253, 256 ; ou 275, 256) pour mesurer un signal électrique comprennent des moyens pour mesurer l'écoulement de courant dans ladite électrode (226 ou 235).

3. Appareil selon la revendication 2, dans lequel ladite électrode (226 ou 235) est reliée audit corps (202).

4. Appareil selon la revendication 3, dans lequel lesdits moyens (253, 256 ; ou 275, 256) pour mesurer l'écoulement de courant dans ladite électrode (226 ou 235) comprennent des moyens pour mesurer l'amplitude de courant s'écoulant depuis ladite électrode vers ledit corps (202).

5. Appareil selon la revendication 3 ou 4, dans lequel la surface de ladite électrode (226 ou 235) est électriquement isolée de la surface dudit corps (202).

6. Appareil selon l'une quelconque des revendications précédentes, dans lequel ladite électrode comprend une électrode bouton (226) faisant face à une paroi dudit trou de sondage.

7. Appareil selon l'une quelconque des revendications 1 à 5, dans lequel ladite électrode comprend un conducteur en forme d'anneau (235) encerclant l'axe dudit corps (202).

8. Appareil selon la revendication 6, dans lequel ladite électrode bouton (226) est directement montée comme un appendice dans ledit corps (202), et dans lequel lesdits moyens (253, 256) pour mesurer l'amplitude de l'écoulement de courant dans ladite électrode comprennent une bobine (253) entourant ledit appendice et des moyens (256) pour mesurer le courant induit dans ladite bobine.

9. Appareil selon l'une quelconque des revendications 1 à 7, dans lequel ladite électrode (226 ou 235) est reliée audit corps (202) par l'intermédiaire de l'enroulement primaire d'un transformateur (275), et dans lequel lesdits moyens pour mesurer l'écoulement de courant dans ladite électrode comprennent des moyens (256 ou 2561) pour mesurer le courant induit dans l'enroulement secondaire dudit transformateur.

10. Appareil selon l'une quelconque des revendications précédentes, comprenant, de plus, au moins une électrode supplémentaire (227 ou 228) disposée sur ledit corps à un espacement différent à partir de ladite antenne à inductance toroïdale (205) par rapport à ladite électrode précédemment mentionnée, et des moyens pour déterminer l'écoulement de courant dans ladite au moins une électrode supplémentaire (226), pour obtenir une indication supplémentaire de la résistivité desdites formations.

11. Appareil selon l'une quelconque des revendications précédentes, dans lequel ladite électrode (226) est montée sur une lame (220) qui est reliée, de façon mécanique audit corps (202).

12. Appareil selon l'une quelconque des revendications précédentes, à utiliser dans un système de mesure tout en forant, dans lequel ledit corps comprend une masse-tige (202) dans une chaîne de forage (12), ladite masse-tige comprenant un corps tubulaire allongé (202), et dans lequel ladite antenne toroïdale (205) est montée sur ledit corps dans un milieu isolant (206), ladite antenne comprenant une bobine montée sur un noyau toroïdal ayant un axe sensiblement coïncident avec l'axe de la masse-tige.

13. Appareil selon la revendication 12, comprenant, de plus, des moyens pour communiquer ladite indication de résistivité à la surface de la terre.

14. Appareil pour déterminer la résistivité de formations entourant un trou de sondage terrestre, comprenant :

   un corps allongé électriquement conducteur (1202) qui est mobile dans le trou de sondage ;
   des premiers moyens émetteurs (T1) pour établir un premier courant dans le corps à partir d'une première position d'émetteur sur le corps, ledit premier courant parcourant un chemin qui comprend le corps et les formations ; et
   des seconds moyens émetteurs (T2) pour établir un second courant dans le corps à partir d'une seconde position d'émetteur sur le corps qui est écartée de la première position d'émetteur, ledit second courant parcourant un chemin qui comprend le corps et les formations ;

   ledit appareil étant caractérisé par :

   une électrode (R ou B) sur ledit corps ayant une surface qui est électriquement isolée de la surface du corps ;
   des moyens (2611 ou 2613) pour mesurer au niveau de ladite électrode un premier signal électrique résultant dudit premier courant et un second signal électrique résultant dudit second courant ;
   un moyen de contrôle de courant (MO) pour mesurer le courant axial passant par une position de contrôle sur le corps pour obtenir une valeur de courant de contrôle ; et

des moyens (1025) pour déduire une indication de résistivité de formation en tant que fonction dudit premier signal électrique, dudit second signal électrique, et de ladite valeur de courant de contrôle.

**15.** Appareil selon la revendication 14, dans lequel lesdits moyens de contrôle de courant (MO) comprennent des moyens (2615) pour obtenir une première valeur de courant de contrôle quand lesdits premiers moyens émetteurs (T1) sont opérationnels et une seconde valeur de courant de contrôle quand lesdits seconds moyens émetteurs sont opérationnels, lesdits moyens de déduction (1025) étant opérationnels pour déduire ladite indication de résistivité de formation en tant que fonction dudit premier signal électrique, dudit second signal électrique, de ladite première valeur de courant de contrôle, et de ladite seconde valeur de courant de contrôle.

**16.** Appareil selon la revendication 14 ou 15, comprenant, de plus, des moyens supplémentaires de contrôle de courant (M1 ou M2) au niveau d'une position supplémentaire de contrôle sur ledit corps (1202) pour mesurer le courant axial passant par la position supplémentaire de contrôle (1202) pour obtenir une valeur supplémentaire de courant de contrôle, lesdits moyens d'obtention (1025) étant opérationnels pour déduire ladite indication de résistivité de formation en tant que fonction de ladite valeur supplémentaire de courant de contrôle.

**17.** Appareil selon l'une quelconque des revendications 14 à 16, dans lequel lesdites première et seconde positions d'émetteur sont espacées sur ledit corps (1202), ladite électrode (R ou B) est située entre lesdites première et seconde positions d'émetteur, et ladite position de contrôle est située entre lesdites première et seconde positions d'émetteur.

**18.** Appareil selon la revendication 17, dans lequel ladite position de contrôle est adjacente à ladite électrode (R ou B).

**19.** Appareil selon l'une ou l'autre des revendications 17 ou 18 lorsqu'elles sont dépendantes de la revendication 16, dans lequel ladite position supplémentaire de contrôle est adjacente à l'une desdites positions d'émetteur, et lesdits moyens supplémentaires de contrôle (M1 ou M2) obtiennent ladite valeur supplémentaire de courant de contrôle lorsque les moyens émetteurs (T2 ou T1), au niveau de l'autre desdites positions d'émetteur, sont opérationnels.

**20.** Appareil selon la revendication 19, dans lequel ledit premier signal électrique est désigné par $R_1$, ledit second signal électrique est désigné par $R_2$, ladite première valeur de courant de contrôle est désignée par $M_{01}$, ladite seconde valeur de courant de contrôle est désignée par $M_{02}$, et ladite valeur supplémentaire de courant de contrôle est désignée par $M_{12}$, et dans lequel lesdits moyens d'obtention (1025) obtiennent ladite résistivité de formation comme étant inversement proportionnelle à $\frac{1}{M_{12}} (M_{02}R_1 + M_{01}R_2)$.

**21.** Appareil selon l'une quelconque des revendications 14 à 20, dans lequel lesdits premier et second moyens émetteurs (T1 et T2) et lesdits moyens de contrôle de courant (MO) comprennent, chacun, une antenne toroïdale.

**22.** Appareil selon l'une quelconque des revendications 14 à 21, dans lequel ladite électrode comprend une électrode en anneau (R).

**23.** Appareil selon l'une quelconque des revendications 14 à 21, dans lequel ladite électrode comprend une électrode bouton (B).

**24.** Appareil selon l'une quelconque des revendications 14 à 23, dans lequel ledit corps conducteur est une masse-tige métallique (1202) dans une chaîne de forage.

**25.** Appareil selon l'une quelconque des revendications 14 à 23, dans lequel ledit corps conducteur comprend des parties de tuyau reliées.

**26.** Appareil selon la revendication 25, dans lequel ledit corps est suspendu dans ledit trou de sondage sur un câble de travail.

**27.** Procédé de détermination de la résistivité de formations entourant un trou de sondage, comprenant les étapes suivantes :

mise en place d'un corps allongé électriquement conducteur qui est mobile dans le trou de sondage ; et
établissement d'un courant dans ledit corps qui parcourt un chemin qui comprend le corps et les formations ;

ledit procédé étant caractérisé par :

une mesure d'un signal électrique résultant dudit courant au niveau d'une électrode sur le corps qui a une surface qui est électriquement isolée de la surface du corps, pour obtenir un signal mesuré d'électrode ; une déduction d'un signal de compensation en provenance d'une mesure du courant axial dans le corps ; et une production d'un signal compensé d'électrode en tant que fonction dudit signal mesuré d'électrode et dudit signal de compensation, le signal compensé d'électrode étant indicatif de la résistivité de la formation.

28. Procédé selon la revendication 27, comprenant, de plus, l'étape de déduction de la résistivité de la formation à partir dudit signal compensé d'électrode.

29. Procédé selon la revendication 27 ou 28, dans lequel ladite étape d'établissement d'un courant comprend l'établissement de premier et second courants à partir des positions espacées d'émetteur sur ledit corps.

30. Procédé de détermination de la résistivité de formations entourant un trou de sondage, comprenant les étapes suivantes :

mise en place d'un corps allongé électriquement conducteur qui est mobile dans le trou de sondage ; mise en place d'une première source pour établir un premier courant dans le corps qui parcourt un chemin qui comprend le corps et les formations ; et mise en place d'une seconde source pour établir un second courant dans le corps qui parcourt un chemin qui comprend le corps et les formations de sorte que lesdits premier et second courants se déplacent dans le corps dans des sens opposés ;

ledit procédé étant caractérisé par :

une mesure d'un courant axial dans le corps, et une commande d'au moins une desdites sources en tant que fonction du courant axial mesuré ; et une mesure d'un signal électrique au niveau d'une électrode sur le corps qui a une surface qui est électriquement isolée de la surface du corps, ledit signal étant indicatif de la résistivité de la formation.

31. Procédé selon la revendication 30, dans lequel ledit courant axial est mesuré au niveau d'une position sur ledit corps qui est adjacente à ladite électrode.

FIG.1

FIG.2

FIG.3

FIG.4

$$V_B = \frac{R_1 I_B}{N}$$

FIG.5

226

$I_B$

253

$R_1$

$V_A$

+
−

256

$V_B = \dfrac{R_1 I_B}{N}$

1 TURN     N TURNS

## FIG.6

220   271   273

$I_B$

226´

202

275

$R_2$

−
+

$V_B = \dfrac{R_2 I_B n_1}{n_2}$

256´

FIG.7

$n_1$   $n_2$

FIG.8

EP 0 540 425 B1

FIG.9

FIG.10

# FIG.11

```
                              ┌─────────────────┐
                              │ SET INITIAL MODE│
                              │ TO MEASUREMENT  │──── 1115
                              └─────────────────┘

                                    ◇ WHICH
              MEASURE              MODE ACTIVE        SEND/RCV.
                                       ?
                                      1118

┌──────────────────┐                              ┌──────────────────┐
│   ENABLE         │                              │   SEND LATEST    │
│   SINEWAVE GEN.  │──── 1120                     │   FRAME OF DATA  │──── 1160
│   & POWER AMP.   │                              └──────────────────┘
└──────────────────┘

┌──────────────────┐                              ┌──────────────────┐
│ SET ELECTRONIC   │                              │   SEND "READY    │
│ SWITCH TO        │──── 1122                     │   TO RECEIVE "   │──── 1165
│ SEND/MEASURE     │                              └──────────────────┘
│ POSITION         │
└──────────────────┘

┌──────────────────┐                              ┌──────────────────┐
│ SET MULTIPLEXER  │                              │ DISABLE SINEWAVE │
│ TO FIRST RCVR.   │──── 1125                     │ GEN. AND POWER   │──── 1168
│ POSITION         │                              │ AMP.             │
└──────────────────┘                              └──────────────────┘

┌──────────────────┐                              ┌──────────────────┐
│   READ DATA      │──── 1128                     │ SET ELECTRONIC   │
└──────────────────┘                              │ SWITCH TO        │──── 1170
                                                  │ RECEIVE POSITION │
┌──────────────────┐    ┌──────────────┐          └──────────────────┘
│  COMPUTE AND     │    │   SET        │
│  STORE RESISTIVITY│──1130│ MULTIPLEXER │──1143   ┌──────────────────┐
└──────────────────┘    │   TO NEXT    │          │  RECEIVE FRAME   │
                        │   RECEIVER   │          │ FROM SURFACE/LOCAL│
┌──────────────────┐    │   POSITION   │          │ COMMUNICATIONS   │──── 1175
│  APPLY DATA TO   │    └──────────────┘          │ SUBASSEMBLY      │
│  OUTPUT BUFFER   │──── 1132                      └──────────────────┘
└──────────────────┘
                     1145                              1176
         ◇ LAST RECIEVER          NO                   INTERRUPT
              ?                                          RETURN
         YES      1140                    1177

                              ┌──────────┐
                              │  SWITCH  │
                              │  MODE    │──── 1150
                              └──────────┘
```

FIG.12

FIG.13

FIG.14

1202

T1

R

M0

T2

M2

15

FIG.15

FIG.16

FIG.17

EP 0 540 425 B1

FIG.18

FIG.19

RADIUS (INCH)

DISTANCE ABOVE BOTTOM OF TOOL (INCH)

EP 0 540 425 B1

FIG.20

EP 0 540 425 B1

FIG.21

EP 0 540 425 B1

FIG.22

EP 0 540 425 B1

FIG.23

FIG.24

FIG.25

FIG.26

FIG.27

FIG.28

FIG.29

1210

150

1225

1220

1250

FIG.30

FIG.31

SET SWITCH
TO RECEIVE
POSITION — 1420

WAIT UNTIL SYNC
SIGNAL RECEIVED — 1422

RECEIVE AND STORE
DATA INTO RCV.
BUFFER — 1424

1426 — END OF FRAME
DETECTED

READ AND STORE
INFO. FROM RCV. BUFFER
1430 —

1440 — OUTPUT DATA TO
OUTPUT BUFFER

ANY
DATA TO
TRANSMIT
?
1460 — YES
NO

ENABLE SINE
WAVE GEN.
AND POWER
AMP. — 1465

SET SWITCH
TO TRANSMIT
POSITION — 1470

TRANSMIT
DATA IN
BUFFER — 1475

FIG.32

FIG.33